(19) Europäisches Patentamt / European Patent Office / Office européen des brevets

(11) **EP 4 378 617 B1**

(12) **EUROPEAN PATENT SPECIFICATION**

(45) Date of publication and mention
of the grant of the patent:
**03.06.2026 Bulletin 2026/23**

(21) Application number: **22867107.9**

(22) Date of filing: **27.07.2022**

(51) International Patent Classification (IPC):
**B23K 20/12** *(2006.01)* **B23K 20/22** *(2006.01)*

(52) Cooperative Patent Classification (CPC):
**B23K 20/122; B23K 20/1265; B23K 20/22**

(86) International application number:
**PCT/JP2022/029028**

(87) International publication number:
**WO 2023/037785 (16.03.2023 Gazette 2023/11)**

(54) **ELECTRICAL STEEL STRIP FRICTION STIR WELDING METHOD AND METHOD OF PRODUCING ELECTRICAL STEEL STRIP**

REIBRÜHRSCHWEISSVERFAHREN FÜR ELEKTROMAGNETISCHES STAHLBAND UND VERFAHREN ZUR HERSTELLUNG EINES ELEKTROMAGNETISCHEN STAHLBANDS

PROCÉDÉ DE SOUDAGE PAR FRICTION-MALAXAGE POUR BANDE D'ACIER ÉLECTROMAGNÉTIQUE ET PROCÉDÉ DE FABRICATION DE BANDE D'ACIER ÉLECTROMAGNÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2021 JP 2021148995**
**13.09.2021 JP 2021148994**

(43) Date of publication of application:
**05.06.2024 Bulletin 2024/23**

(73) Proprietor: **JFE Steel Corporation**
**Tokyo 100-0011 (JP)**

(72) Inventors:
• **MATSUSHITA, Muneo**
**Tokyo 100-0011 (JP)**
• **IWATA, Shohei**
**Tokyo 100-0011 (JP)**
• **KITANI, Yasushi**
**Tokyo 100-0011 (JP)**

(74) Representative: **Grünecker Patent- und Rechtsanwälte**
**PartG mbB**
**Leopoldstraße 4**
**80802 München (DE)**

(56) References cited:
**WO-A1-2011/024320** **WO-A1-2018/070317**
**WO-A1-2021/060176** **WO-A1-2021/060176**
**JP-A- 2003 170 280** **JP-A- 2018 095 956**

# EP 4 378 617 B1

**Description**

TECHNICAL FIELD

The present disclosure relates to an electrical steel strip friction stir welding method and a method of producing an electrical steel strip.

BACKGROUND

In steel sheet production lines, such as pickling, cold rolling, annealing, and coating or plating production lines, in order to improve productivity and increase yield, performing so-called coil joining then passing a steel strip through the production line is common. Here, coil joining refers to the joining of an end (trailing end) of a preceding steel strip and an end (leading end) of the steel strip following the preceding steel strip (hereinafter also referred to as trailing steel strip) in a production line. Hereinafter, a joined portion formed by coil joining is also referred to as a coil joint. The leading end is the end of the steel strip in the direction of travel on the production line. Further, the trailing end is the end of the steel strip in the direction opposite the direction of travel on the production line. Coil joining enables rolling and the like with tension applied to the entire length of the steel strip. Further, coil joining enables highly precise control of strip thickness and shape even at the leading and trailing ends of the steel strip.

In coil joining, conventionally, flash butt welding and the like are commonly applied. However, with advances in laser welders, laser welding is becoming a mainstream application for coil joining in, for example, production lines for electrical steel sheets, stainless steel sheets, and high tensile strength steel sheets.

As examples of such technology, Patent Literature (PTL) 1 describes:
"A high-Si steel laser welding method comprising, when welding high-Si steel, welding using a filler wire containing Ni as the main component or supplying powder filler containing Ni as the main component, so that the chemical composition of weld metal satisfies the following Expression (1).

$$X = [\%Ni] - [\%Si] \times 2.5 - ([\%Cr] + [\%Mo]) \times 0.4 \geq 0 \qquad ...(1)$$

Here, [%Ni], [%Si], [%Cr], and [%Mo] represent content (wt%) of Ni, Si, Cr, and Mo in the weld metal, respectively."

PTL 2 describes:
"In a laser welding method for butt welding a leading sheet and a trailing sheet using a filler wire, a ratio (Gap/DEPO) of the butt gap (Gap) between the leading sheet and the trailing sheet to an average width of the weld metal (DEPO) at an initial stage of welding is 0.3 to 0.8."

PTL 3 describes:

"In a welded portion formed by laser welding a leading sheet and a trailing sheet made of special steel that are conveyed on a continuous cold rolling line,

when L1 is the minimum thickness of base metal existing below an upper extension portion consisting of weld metal that extends to the upper side of the base metal due to cold rolling, and L2 is the minimum thickness of the base metal between the upper extension portion and a lower extension portion consisting of weld metal that extends to the lower side of the base metal due to cold rolling, then at least one of L1 or L2 is greater than zero."

CITATION LIST

Patent Literature

PTL 1: JP H5-305466 A
PTL 2: JP 2004-25284 A
PTL 3: JP 2011-140026 A
PTL 4: JP H07-505090 A (publication in Japan of WO 9310935 A1)
PTL 5: JP 3261433 B2
PTL 6: JP 4838385 B2
PTL 7: JP 4838388 B2
PTL 8: JP WO 2019/26864 A1

PTL 9: JP WO 2019/54400 A1
PTL 10: JP 5185103 B2
PTL 11: JP 2015-127063 A
PTL 12: JP 2003-181655 A
PTL 13: JP 2003-290936 A
PTL 14: JP 2004-195480 A
PTL 15: JP 2011-115846 A

Non-Patent Literature

NPL 1: Cui, L.; Fujii, H.; Tsuji, N.; Nogi, K. Scripta Mater. 2007, 56, p.637-640.

SUMMARY

(Technical Problem)

Laser welding is fusion welding, and therefore causes embrittlement due to impurity segregation during fusion and solidification, and due to hydrogen entry. As a result, deterioration of mechanical properties of the joined portion (welded portion) may occur. In particular, electrical steel sheet chemical composition contains a large amount of Si, and therefore mechanical properties of coil joints tend to deteriorate significantly. Therefore, when laser welding as in PTL 1 to 3 is applied as coil joining of electrical steel strips, there is a problem in that a fracture may occur at a coil joint, resulting in a drop in productivity due to line stoppage and the like on a production line such as a continuous cold rolling line.

It would be helpful to solve the above problem and to provide an electrical steel strip friction stir welding method that is able to inhibit the occurrence of coil joint fracture on a production line caused by deterioration of mechanical properties and shape of the coil joint.

Further, it would be helpful to provide a method of producing an electrical steel strip using the electrical steel strip friction stir welding method.

(Solution to Problem)

The inventors conducted intensive studies to solve the technical problem outlined above. First, the inventors investigated and examined the reasons for the deterioration of mechanical properties and shape of coil joints when laser welding is applied as coil joining of electrical steel strips, and made the following discoveries.

(a) As mentioned above, electrical steel sheet chemical composition contains a large amount of Si, for example 2.0 mass% to 5.0 mass%. Si is a ferrite-stabilizing element. Therefore, when typical laser welding is applied to coil joining of electrical steel strips, ferrite crystal grains in the coil joint, which is a fusion zone, and also ferrite crystal grains in a heat-affected zone, become coarse. This greatly degrades mechanical properties of the coil joint, especially toughness and bending strength, and leads to the occurrence of coil joint fracture in the production line.

(b) Further, the technologies in PTL 1 to 3 use a filler mainly composed of Ni, an austenite-stabilizing element. Therefore, at the coil joints, mainly austenite phase is obtained. However, according to the technologies described in PTL 1 to 3, it is necessary to control balance between Ni equivalent and Cr equivalent in the fusion zone (weld metal) properly at all times by eliminating variation of the butt gap between the preceding steel strip and the trailing steel strip and by extremely strictly controlling an amount of fusion of the filler and the steel sheet at the fusion zone (weld metal). In other words, when the balance between the Ni equivalent and the Cr equivalent in the fusion zone (weld metal) is not properly controlled, a martensitic phase that is a hard and brittle microstructure forms in the coil joint. This greatly degrades mechanical properties of the coil joint, especially toughness. Further, in the heat-affected zone, mechanical properties of the coil joint deteriorate greatly due to the coarsening of ferrite crystal grains. These reasons lead to the occurrence of coil joint fracture in a production line.

(c) Further, the above-mentioned variation in the butt gap between the preceding steel strip and the trailing steel strip affects weld reinforcement height. For example, when weld reinforcement height is high and a welded portion is excessively convex, stresses will be concentrated at the weld toe portions when the weld is under load. Therefore, the above-mentioned variation in the butt gap between the preceding steel strip and the trailing steel strip is also a cause of coil joint fracture occurrence in a production line. Excess weld may be removed by grinding or other means. However, such an increase in processing leads to a significant decrease in productivity.

Based on the above discoveries, the inventors further conducted various investigations and arrived at the idea of applying friction stir welding as electrical steel strip coil joining.

Here, friction stir welding is solid phase joining that utilizes frictional heat between a rotating tool and material to be joined and plastic flow of the material to be joined. In other words, a rotating tool is used to friction stir an unjoined portion (region to be joined) of the material to be joined. When the unjoined portion of the material to be joined is heated by frictional heat, plastic flow begins. An interface between a plastic flow zone and a base metal portion is then greatly elongated. As a result, clean interfaces without oxides come into contact with each other, and a joined portion is formed without fusion of the material to be joined. Here, a joined portion is a region that undergoes hot working due to frictional heat between the rotating tool and the material to be joined and plastic flow to form a recrystallized microstructure, and is sometimes referred to as a stir zone. Further, a region adjacent to the joined portion is affected by hot working due to frictional heat and plastic flow, but the region is formed having a microstructure without recrystallization, due to insufficient temperature and working. This region is called a thermo-mechanically affected zone. Further, a region also exists in the material to be joined that is not affected by hot working due to frictional heat and plastic flow. This region is called a base metal portion. Technology related to friction stir welding is described in, for example, PTL 4 to 15 and NPL 1, but none of these are applicable to electrical steel strip coil joining. Document WO 2021/060176 A1 discloses methods of butt-joining or lap-joining the rear end of the leading steel strip and the tip of the trailing steel strip, wherein a pair of rotation tools are arranged on one side and the other side of the butt portion or the lap portion of the steel strip, respectively. While rotating in opposite directions, the steel strips are pressed against the abutting portion or the overlapping portion to move in the joining direction, and the unjoined portion of the steel strip is softened by the frictional heat between the rotating tool and the unjoined portion of the steel strip.

Based on the above ideas, the inventors conducted further studies and came to the following discoveries.

(d) To advantageously solve the problems (a) to (c), so-called double-sided friction stir welding is applied as a joining method. In addition, it is then important that diameter D (mm) of shoulders of rotating tools satisfies the relationship of the following Expression (1) and that joining conditions are appropriately controlled. In controlling the joining conditions, it is particularly important that rotation speed RS (r/min) of the rotating tools, the diameter D (mm) of the shoulders of the rotating tools, and the joining speed JS (mm/min), expressed as $RS \times D^3/JS$, satisfy the relationship of the following Expression (2).

As a result, even when electrical steel strips are used as the material to be joined, mechanical properties of the coil joint are improved without causing deterioration of the shape of the coil joint, and the occurrence of coil joint fractures in a production line is effectively inhibited. Further, joining speed may be increased while inhibiting the occurrence of defects, and this is very advantageous in terms of work efficiency.

$$4 \times TJ \leq D \leq 10 \times TJ \qquad ...(1)$$

$$200 \times TJ \leq RS \times D^3/JS \leq 2000 \times TJ \qquad ...(2)$$

Here, TJ is defined such that,

When the unjoined portion is a butted portion, TJ is an average value (mm) of the thickness of a first electrical steel strip and the thickness of a second electrical steel strip, and

When the unjoined portion is an overlapped portion, TJ is the thickness (mm) of the overlapped portion.

(e) Further, in addition to satisfying both of the relationships of Expressions (1) and (2) above, the steel microstructures of the joined portion and thermo-mechanically affected zone are preferably made to be mainly ferrite, and both refinement of the steel microstructures of the joined portion and thermo-mechanically affected zone and reduction of a hardness difference between the joined portion and the base metal portion are preferred. Specifically, satisfying the relationships of the following Expressions (3) to (6) at the same time is preferred. In accordance with the invention, the first and second electrical strips each have a chemical composition containing C: 0.005 mass% or less, Si: 2.0 mass% to 5.0 mass%, A1: 3.0 mass% or less, Mn: 2.00 mass% or less, P: 0.2 mass% or less, S: 0.01 mass% or less, and N: 0.01 mass% or less, with the balance being Fe and inevitable impurity. The above chemical composition may contain at least one selected from the group consisting of, in mass%: Sn: 0.2 % or less, Sb: 0.2 % or less, Ca: 0.01 % or less, REM: 0.05 % or less, and Mg: 0.01 % or less. Further, the above chemical compositions may contain at least one element selected from the group consisting of, in mass%: Cr: 1 % or less, Ni: 1 % or less, and Cu: 1 % or less.

As a result, even when electrical steel strips are used as the material to be joined, mechanical properties of the coil joint are improved without causing deterioration of the shape of the coil joint, and the occurrence of coil joint fractures in a production line is more effectively inhibited.

$$Dsz \leq 200 \ \mu m \qquad ...(3)$$

$$Dhaz1 \leq Dbm1 \qquad \ldots(4)$$

$$Dhaz2 \leq Dbm2 \qquad \ldots(5)$$

$$0.9 \times (Hbm1 + Hbm2)/2 \leq Hsz \leq 1.2 \times (Hbm1 + Hbm2)/2 \qquad \ldots(6)$$

Here,

Dsz is an average value (μm) of ferrite grain size of the joined portion,
Dhaz1 is an average value (μm) of ferrite grain size of the thermo-mechanically affected zone on a first electrical steel strip side,
Dhaz2 is an average value (μm) of ferrite grain size of the thermo-mechanically affected zone on a second electrical steel strip side,
Dbm1 is an average value (μm) of ferrite grain size of the base metal portion of the first electrical steel strip,
Dbm2 is an average value (μm) of ferrite grain size of the base metal portion of the second electrical steel strip,
Hsz is an average value of hardness of the joined portion,
Hbm1 is an average value of hardness of the base metal portion of the first electrical steel strip, and
Hbm2 is an average value of hardness of the base metal portion of the second electrical steel strip.

(f) In addition, by applying double-sided friction stir welding as a joining method and satisfying both of the relationships of Expressions (1) and (2) above, the stirring function is further enhanced. Therefore, it becomes possible to use a rotating tool without a probe that has only a shoulder at the lead end of the rotating tool (hereinafter also referred to simply as a rotating tool without a probe). In other words, in a typical rotating tool (hereinafter also referred to as a rotating tool with a probe), a probe (pin) is disposed at the lead end, the probe protruding from the shoulder. As a result, the probe is subjected to greater stress than the shoulder and is prone to breakage and wear. Therefore, the use of a rotating tool without a probe is very advantageous in terms of durability and extended service life of the rotating tool, and thus in reducing joint failure rates (due to wear and breakage of the rotating tool). Here, a rotating tool without a probe is, for example, a rotating tool without a probe in which a leading end of the rotating tool (contact surface with the material to be joined) is a plane, a convex curved surface, or a concave curved surface.

(g) Further, for a rotating tool without a probe, a spiral-shaped stepped portion spiraling in the opposite direction to rotation is preferably provided on the leading end of the rotating tool. This promotes plastic flow to increase joining speed and further improve work efficiency.

The present disclosure is based on these discoveries and further studies.

Primary features of the present disclosure are as follows.

1. An electrical steel strip friction stir welding method for joining a first electrical steel strip and a second electrical steel strip following the first electrical steel strip by a pair of rotating tools facing each other, comprising:

pressing the rotating tools into an unjoined portion that is a butted portion or an overlapped portion between an end of the first electrical steel strip and an end of the second electrical steel strip from both sides of the unjoined portion while rotating the rotating tools in opposite directions; and
joining the first electrical steel strip and the second electrical steel strip by moving the rotating tools in a joining direction, wherein
the diameter D (mm) of shoulders of the rotating tools satisfies the relationship of the following Expression (1), and
a rotation speed RS (r/min) of the rotating tools, the diameter D (mm) of the shoulders of the rotating tools, and a joining speed JS (mm/min), expressed as $RS \times D^3/JS$, satisfy the relationship of the following Expression (2),

$$4 \times TJ \leq D \leq 10 \times TJ \qquad \ldots(1)$$

$$200 \times TJ \leq RS \times D^3/JS \leq 2000 \times TJ \qquad \ldots(2)$$

where TJ is defined such that,
when the unjoined portion is the butted portion, TJ is an average value (mm) of the thickness of the first electrical steel strip and the thickness of the second electrical steel strip, and
when the unjoined portion is the overlapped portion, TJ is the thickness (mm) of the overlapped portion.

2. The electrical steel strip friction stir welding method according to aspect 1, wherein the joining is performed under conditions that the steel microstructures of the joined portion and the thermo-mechanically affected zone formed by the joining of the first electrical steel strip and the second electrical steel strip become mainly ferrite phase and the relationships of the following Expressions (3) to (6) are satisfied,

$$\text{Dsz} \leq 200 \ \mu\text{m} \qquad \ldots(3)$$

$$\text{Dhaz1} \leq \text{Dbm1} \qquad \ldots(4)$$

$$\text{Dhaz2} \leq \text{Dbm2} \qquad \ldots(5)$$

$$0.9 \times (\text{Hbm1} + \text{Hbm2})/2 \leq \text{Hsz} \leq 1.2 \times (\text{Hbm1} + \text{Hbm2})/2 \qquad \ldots(6)$$

wherein

Dsz is an average value ($\mu$m) of ferrite grain size of the joined portion,
Dhaz1 is the average value ($\mu$m) of ferrite grain size of the thermo-mechanically affected zone on the first electrical steel strip side,
Dhaz2 is an average value ($\mu$m) of ferrite grain size of the thermo-mechanically affected zone on a second electrical steel strip side,
Dbm1 is an average value ($\mu$m) of ferrite grain size of the base metal portion of the first electrical steel strip,
Dbm2 is an average value ($\mu$m) of ferrite grain size of the base metal portion of the second electrical steel strip,
Hsz is an average value of hardness of the joined portion,
Hbm1 is an average value of hardness of the base metal portion of the first electrical steel strip, and
Hbm2 is an average value of hardness of the base metal portion of the second electrical steel strip.

3. The electrical steel strip friction stir welding method according to aspect 1 or 2, wherein the joining is performed under conditions satisfying the relationships of the following Expressions (7) and (8),

$$0.8 \times \text{TbmL} \leq \text{TszL} \qquad \ldots(7)$$

$$\text{TszH} \leq 1.3 \times \text{TbmH} \qquad \ldots(8)$$

wherein

TszL is the minimum value (mm) of the thickness of the joined portion,
TszH is the maximum value (mm) of the thickness of the joined portion,
TbmL is the thickness (mm) of the thinner of the first electrical steel strip and the second electrical steel strip,
TbmH is the thickness (mm) of the thicker of the first electrical steel strip and the second electrical steel strip, and
when the thicknesses of the first electrical steel strip and the second electrical steel strip are the same, TbmL = TbmH.

4. The electrical steel strip friction stir welding method according to any one of aspects 1 to 3, wherein the relationship of the following Expression (9) is satisfied

$$0° < \alpha \leq 2° \qquad \ldots(9)$$

where $\alpha$ is a tilt angle (°) of the rotating tools.

5. The electrical steel strip friction stir welding method according to any one of aspects 1 to 4, wherein a gap G (mm) between the shoulders of the rotating tools satisfies the relationship of the following Expression (10),

$$0.5 \times \text{TJ} - 0.1 \times \text{D} \times \sin\alpha \leq \text{G} \leq 0.9 \times \text{TJ} - 0.1 \times \text{D} \times \sin\alpha \qquad \ldots(10)$$

where TJ is defined such that,

when the unjoined portion is the butted portion, TJ is an average value (mm) of the thickness of the first electrical steel strip and the thickness of the second electrical steel strip,

when the unjoined portion is the overlapped portion, TJ is the thickness (mm) of the overlapped portion, and

D is the diameter (mm) of the shoulders of the rotating tools, and $\alpha$ is the tilt angle (°) of the rotating tools.

6. The electrical steel strip friction stir welding method according to any one of aspects 1 to 5, wherein the rotating tools are rotating tools without probes.

7. The electrical steel strip friction stir welding method according to aspect 6, wherein the leading ends of the rotating tools are each a flat, convex curved, or concave curved surface.

8. The electrical steel strip friction stir welding method according to aspect 6 or 7, wherein the leading ends of the rotating tools each have a spiral-shaped stepped portion spiraling in the opposite direction to rotation.

9. The electrical steel strip friction stir welding method according to aspect 8, wherein each of the spiral-shaped stepped portions becomes gradually lower from the center to the periphery of the leading end of the rotating tool.

10. The electrical steel strip friction stir welding method according to aspect 8, wherein each of the spiral-shaped stepped portions becomes gradually higher from the center to the periphery of the leading end of the rotating tool.

11. A method of producing an electrical steel strip, the method comprising:

joining a first electrical steel strip and a second electrical steel strip by the electrical steel strip friction stir welding method according to any one of aspects 1 to 10 to obtain a joined steel strip; and

cold rolling the joined steel strip to obtain a cold-rolled steel strip.

(Advantageous Effect)

According to the present disclosure, even when electrical steel strips are used as the material to be joined, no deterioration of mechanical properties or shape of the coil joint occurs, and the occurrence of coil joint fractures in a production line is effectively inhibited. Accordingly, productivity of electrical steel sheets is further improved, and industrial applicability is very high. Further, joining speed may be increased while inhibiting the occurrence of defects, and this is very advantageous in terms of work efficiency. Further, the ability to use rotating tools without probes is very advantageous in terms of durability and extended service life of the rotating tools, and thus in reducing joint failure rates.

BRIEF DESCRIPTION OF THE DRAWINGS

In the accompanying drawings:

FIG. 1A is a schematic diagram for explanation of an electrical steel strip friction stir welding method according to an embodiment of the present disclosure, and is a side perspective view illustrating an example of a butt joint by a double-sided friction stir welding method;

FIG. 1B is a view from A-A in FIG. 1A;

FIG. 1C is a schematic diagram for explanation of an electrical steel strip friction stir welding method according to an embodiment of the present disclosure, and is a side perspective view illustrating an example of a butt joint by a double-sided friction stir welding method;

FIG. 1D is a view from A-A in FIG. 1C;

FIG. 2A is a schematic diagram illustrating an example of shape of a rotating tool with a probe used in an electrical steel strip friction stir welding method according to an embodiment of the present disclosure;

FIG. 2B is a schematic diagram illustrating an example of shape of a rotating tool with a probe used in an electrical steel strip friction stir welding method according to an embodiment of the present disclosure;

FIG. 3 is a schematic diagram illustrating an example of shape of a rotating tool without a probe (flat-end rotating tool) used in an electrical steel strip friction stir welding method according to an embodiment of the present disclosure;

FIG. 4 is a schematic diagram illustrating an example of shape of a rotating tool without a probe (convex-end rotating tool) used in an electrical steel strip friction stir welding method according to an embodiment of the present disclosure;

FIG. 5 is a schematic diagram illustrating an example of shape of a rotating tool without a probe (concave-end rotating tool) used in an electrical steel strip friction stir welding method according to an embodiment of the present disclosure;

FIG. 6 is a schematic diagram illustrating an example of shape of a rotating tool without a probe (flat-end rotating tool with stepped portion) used in an electrical steel strip friction stir welding method according to an embodiment of the present disclosure;

FIG. 7 is a schematic diagram illustrating an example of shape of a rotating tool without a probe (convex-end rotating tool with stepped portion) used in an electrical steel strip friction stir welding method according to an embodiment of the present disclosure;

FIG. 8 is a schematic diagram illustrating an example of shape of a rotating tool without a probe (concave-end rotating tool with stepped portion) used in an electrical steel strip friction stir welding method according to an embodiment of the present disclosure;

FIG. 9 is a diagram for explaining a method of arranging (depicting) spirals at equal intervals with two spirals defining a stepped portion;

FIG. 10 is a diagram for explaining a method of arranging (depicting) spirals at equal intervals with three spirals defining a stepped portion;

FIG. 11 is a diagram for explaining a method of arranging (depicting) spirals at equal intervals with four spirals defining a stepped portion;

FIG. 12 is a diagram for explaining a method of arranging (depicting) spirals at equal intervals with five spirals defining a stepped portion;

FIG. 13 is a diagram for explaining a method of arranging (depicting) spirals at equal intervals with six spirals defining a stepped portion;

FIG. 14 is a schematic diagram illustrating an example of a convex-end rotating tool with a step-like stepped portion;

FIG. 15 is a schematic diagram illustrating an example of a convex-end rotating tool with a grooved stepped portion;

FIG. 16 is a schematic diagram illustrating an example of a flat-end rotating tool with a grooved stepped portion;

FIG. 17 is a schematic diagram of an electrical steel strip welded joint obtained by the electrical steel strip friction stir welding method according to an embodiment of the present disclosure;

FIG. 18A is a schematic diagram (side perspective view) illustrating an example of a butt joint by a single-sided friction stir welding method;

FIG. 18B is a view from A-A in FIG. 18A;

FIG. 19A is a schematic diagram illustrating an example of shape of a rotating tool used in a single-sided friction stir welding method; and

FIG. 19B is a schematic diagram illustrating an example of shape of a rotating tool used in a single-sided friction stir welding method.

DETAILED DESCRIPTION

The following describes embodiments of the present disclosure.

Electrical steel strip friction stir welding method

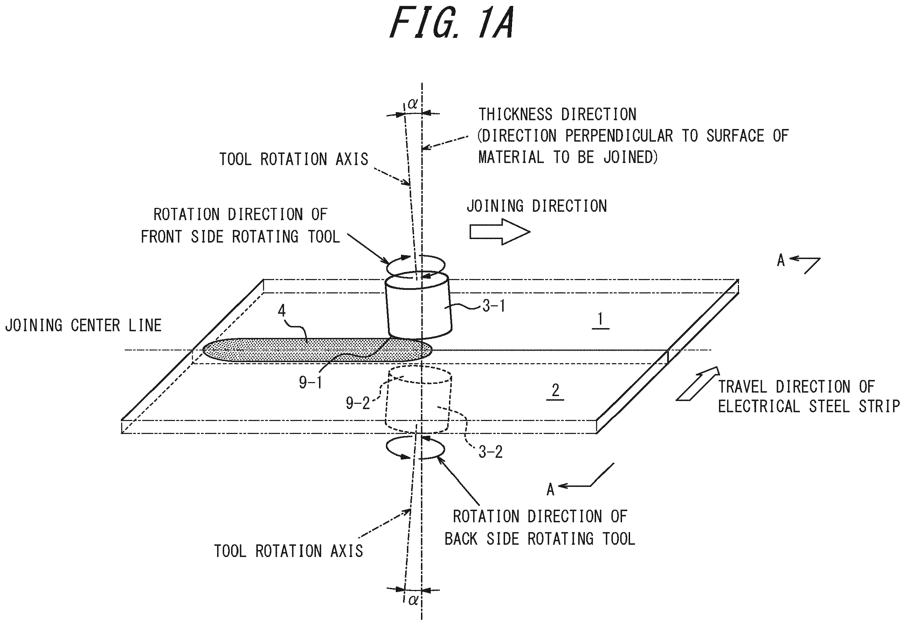

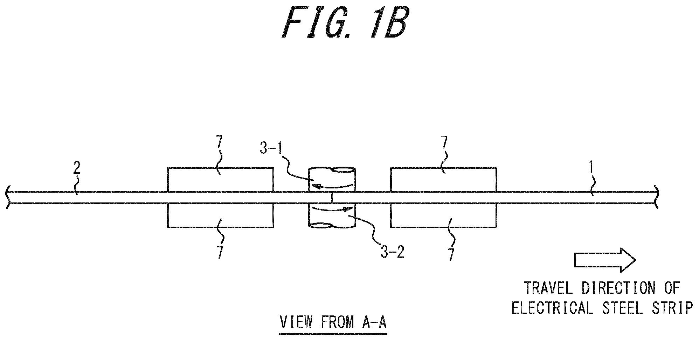

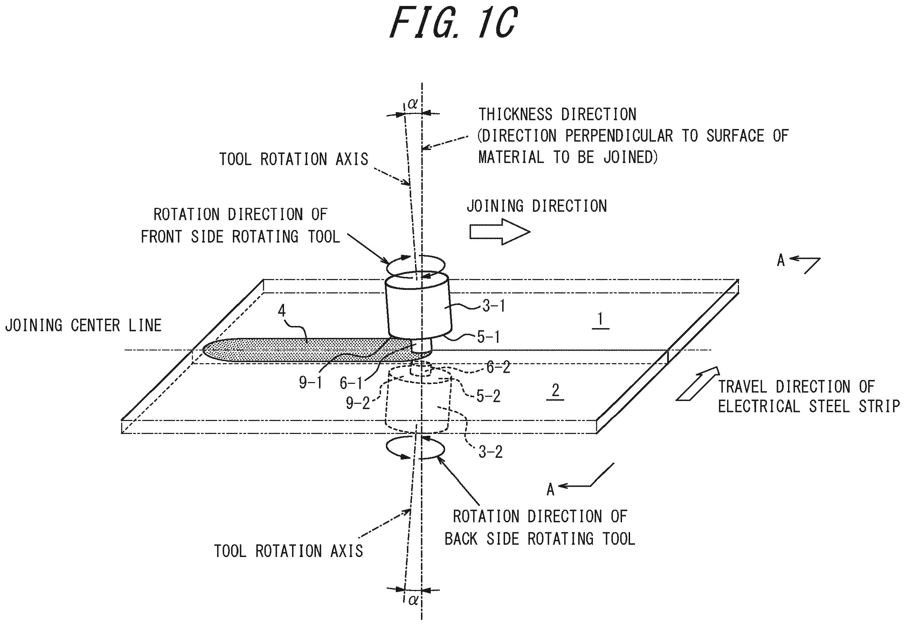

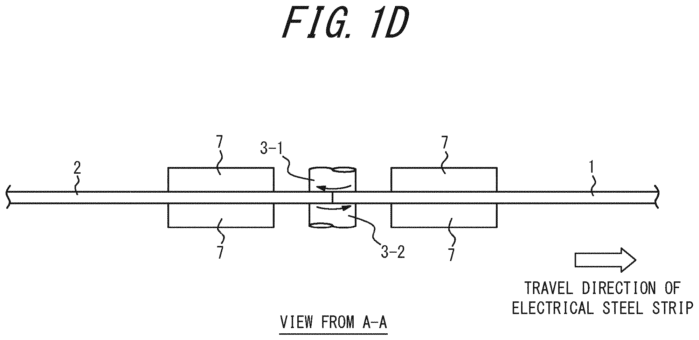

First, the electrical steel strip friction stir welding method according to an embodiment of the present disclosure is described, with reference to FIG. 1A to FIG. 1D. FIG. 1A to FIG. 1D are schematic diagrams for explaining the electrical steel strip friction stir welding method according to an embodiment of the present disclosure. FIG. 1A is a side perspective view of a case in which rotating tools without probes are used, and FIG. 1B is a view from A-A in FIG. 1A. Further, FIG. 1C is a side perspective view of a case in which rotating tools with probes are used, and FIG. 1D is a view from A-A in FIG. 1C.

In the drawings, reference sign 1 indicates a first electrical steel strip (material to be joined), 2 indicates a second electrical steel strip (material to be joined), 3-1 indicates a rotating tool (front side rotating tool), 3-2 indicates a rotating tool (back side rotating tool), 4 indicates a joined portion, 5-1 and 5-2 indicate shoulders, 6-1 and 6-2 indicate probes (pins), 7 indicates a gripping device, and 9-1 and 9-2 indicate lead ends. The gripping device is not illustrated in FIG. 1A or FIG. 1C.

Further, in FIG. 1B and FIG. 1D, the vertical direction is the thickness direction. The horizontal direction is perpendicular to the joining direction and perpendicular to the thickness direction (hereinafter also referred to as the perpendicular-to-joining direction). The direction perpendicular to the plane of the paper towards the reader is the joining direction. That is, the plane illustrated in FIG. 1B and FIG. 1D includes the perpendicular-to-joining direction and the thickness direction.

Electrical steel strip here refers to an intermediate product used as material for producing an electrical steel sheet, in particular an intermediate product at a stage from the end of hot rolling to before heat treatment for primary recrystallization (that is, decarburization annealing or primary recrystallization annealing). An electrical steel strip produced by the method of producing an electrical steel strip according to an embodiment of the present disclosure is obtained by cold rolling after joining the first electrical steel strip and the second electrical steel strip, as described below. Hereinafter, an electrical steel strip obtained by joining the first electrical steel strip and the second electrical steel strip may also be referred to as a joined steel strip, and an electrical steel strip obtained by cold rolling the joined steel strip may also be referred to as a cold-rolled steel strip. Further, the electrical steel strip friction stir welding method according to an embodiment of the present disclosure is suitable, for example, for implementation in a production line for an electrical steel strip, especially in a continuous cold rolling line. Here, a continuous cold rolling line is a production line where steel strips are continuously cold rolled by a cold rolling device. A continuous cold rolling line includes, for example, a steel strip conveyor and a cold rolling device. A continuous cold rolling line may optionally be accompanied by pickling equipment, an annealing furnace, coating equipment, and the like.

The electrical steel strip friction stir welding method according to an embodiment of the present disclosure is, as mentioned above,

an electrical steel strip friction stir welding method for joining a first electrical steel strip and a second electrical steel strip following the first electrical steel strip by a pair of rotating tools facing each other, including:

pressing the rotating tools into an unjoined portion that is a butted portion or an overlapped portion between an end of the first electrical steel strip and an end of the second electrical steel strip from both sides of the unjoined portion while rotating the rotating tools in opposite directions; and

joining the first electrical steel strip and the second electrical steel strip by moving the rotating tools in a joining direction.

The diameter D (mm) of shoulders of the rotating tools satisfies the relationship of the following Expression (1), and

a rotation speed RS (r/min) of the rotating tools, the diameter D (mm) of the shoulders of the rotating tools, and a joining speed JS (mm/min), expressed as $RS \times D^3/JS$, satisfy the relationship of the following Expression (2).

$$4 \times TJ \leq D \leq 10 \times TJ \qquad \ldots(1)$$

$$200 \times TJ \leq RS \times D^3/JS \leq 2000 \times TJ \qquad \ldots(2)$$

Here, TJ is defined such that,

when the unjoined portion is the butted portion, TJ is the average value (mm) of the thickness of the first electrical steel strip and the thickness of the second electrical steel strip, and

when the unjoined portion is the overlapped portion, TJ is the thickness (mm) of the overlapped portion.

Here, butt joints and lap joints are preferred examples of joint types.

In a butt joint, end faces of the first electrical steel strip and the second electrical steel strip face each other, and a rotating tool is pressed against the butted portion including the end faces (butting face) of the first electrical steel strip and the second electrical steel strip while rotating. In this state, the first electrical steel strip and the second electrical steel strip are joined by moving the rotating tool in the joining direction.

In a lap joint, at least a portion of end portions of the first electrical steel strip and the second electrical steel strip are overlapped and a rotating tool is pressed against the overlapped portion while rotating. In this state, the first electrical steel strip and the second electrical steel strip are joined by moving the rotating tool in the joining direction.

Butt joints and lap joints differ only in the form of the unjoined portion and other device configurations are basically the same, and therefore a case of a butt joint by doubled-sided friction stir welding is described as an example, as illustrated in FIG. 1A to FIG. 1D. The double-sided friction stir welding method is a friction stir welding method in which the first electrical steel strip and the second electrical steel strip are joined using a pair of rotating tools facing each other. The pair of rotating tools facing each other are pressed into the unjoined portion from both sides of the unjoined portion while rotating in opposite directions, and in this state, the rotating tools are moved in the joining direction to join the first electrical steel strip and the second electrical steel strip.

Double-sided friction stir welding uses, for example, a double-sided friction stir welding device including a pair of rotating tools facing each other, a gripping device, and a control unit (not illustrated) that controls operation of the rotating tools. The control unit controls, for example, the tilt angle $\alpha$ of the rotating tools, the position of the lead ends of the rotating tools and the distance between the lead ends (probes) (hereinafter also referred to as the gap between probes), a gap G between the shoulders of the rotating tools, joining speed, pressure load, rotation speed of the rotating tools, rotation torque, and the like.

In double-sided friction stir welding, the rotating tools of the friction stir welding device are disposed on each side of the material to be joined, that is, the first electrical steel strip and the second electrical steel strip. The rotating tool disposed on the front side of (vertically above) the first electrical steel strip and the second electrical steel strip may be referred to as the front side rotating tool, and the rotating tool located on the back side of (vertically below) the first electrical steel strip and the second electrical steel strip may be referred to as the back side rotating tool. The first electrical steel strip and the second electrical steel strip are disposed parallel to a joining center line illustrated in the drawings, and are each gripped by the gripping device. Then, the rotating tools are pressed on both sides of the unjoined portion (the region to be joined) on the joining center line, that is, both sides of the butted portion including an end (trailing end) of the first electrical steel strip and an end (leading end) of the second electrical steel strip, while rotating the rotating tools. In this state, the rotating tools are moved in the joining direction. This softens the material to be joined due to frictional heat between the rotating tools and the material to be joined, that is, the first electrical steel strip and the second electrical steel strip. The softened site is then stirred by the rotating tools to generate plastic flow to join the material to be joined, that is, the first electrical steel strip and the second electrical steel strip. In the portion where the joining is completed, the joined portion is formed. Further, the thermo-mechanically affected zone is formed adjacent to the joined portion.

In the electrical steel strip friction stir welding method according to an embodiment of the present disclosure, simultaneously satisfying the following points is important.

- The double-sided friction stir welding is applied as a joining method.
- The diameter D (mm) of the shoulders of the rotating tools satisfies the relationship of the following Expression (1).
- Joining conditions are appropriately controlled, in particular the rotation speed RS (r/min) of the rotating tools, the diameter D (mm) of the shoulders of the rotating tools, and the joining speed JS (mm/min), expressed as $RS \times D^3/JS$, satisfy the relationship of the following Expression (2).

As a result, even when electrical steel strips are used as the material to be joined, mechanical properties of the coil joint are improved without causing deterioration of the shape of the coil joint, and the occurrence of coil joint fractures in a production line is effectively inhibited. Further, joining speed may be increased while inhibiting the occurrence of defects, and this is very advantageous in terms of work efficiency.

$$4 \times TJ \leq D \leq 10 \times TJ \qquad \ldots (1)$$

$$200 \times TJ \leq RS \times D^3/JS \leq 2000 \times TJ \qquad \ldots (2)$$

Here, TJ is defined such that,

when the unjoined portion is the butted portion, TJ is the average value (mm) of the thickness of the first electrical steel strip and the thickness of the second electrical steel strip, and

when the unjoined portion is the overlapped portion, TJ is the thickness (mm) of the overlapped portion.

In other words, the diameter D of the shoulders of the rotating tools (hereinafter also simply referred to as shoulder diameter D) is appropriately controlled according to the thickness of the unjoined portion. This effectively imparts to the material to be joined, that is, the first electrical steel strip and the second electrical steel strip, a temperature increase due to frictional heat generated between the rotating tools and the material to be joined, and a shear stress due to frictional force. Here, when the shoulder diameter D is less than $4 \times TJ$ (mm), sufficient plastic flow might not be obtained. On the other hand, when the shoulder diameter D exceeds $10 \times TJ$ (mm), the region where plastic flow occurs is unnecessarily expanded, and an excessive amount of heat is injected into the joined portion. This leads to coarsening of the recrystallized microstructure of the joined portion. Further, there is a risk of overloading the joining device. Therefore, the relationship of the above Expression (1) is satisfied for the shoulder diameter D. The shoulder diameter D is preferably $5.5 \times TJ$ (mm) or more. The shoulder diameter D is preferably $8 \times TJ$ (mm) or less.

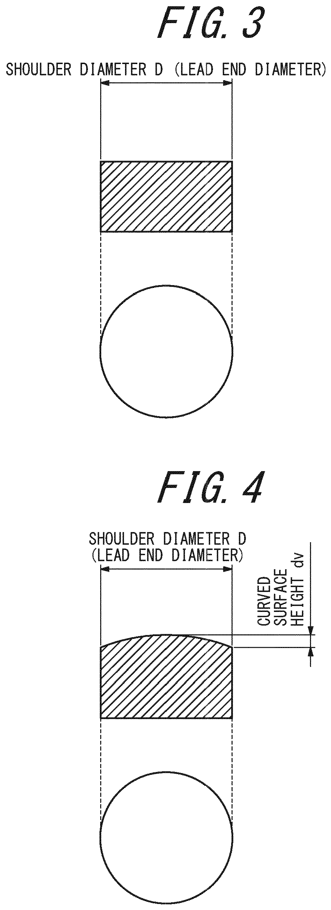

In the case of a rotating tool without a probe, the shoulder diameter D may be a leading end diameter, as illustrated in FIG. 3 to FIG. 5. The leading end diameter is the diameter of the leading end face of the rotating tool in the plane perpendicular to the axis of rotation (the diameter of the projected area when the leading end face of the rotating tool is projected in the direction parallel to the axis of rotation).

Further, $RS \times D^3/JS$ is a parameter that correlates with the amount of heat generated per unit joint length. By setting the range of $RS \times D^3/JS$ from $200 \times TJ$ to $2000 \times TJ$, the temperature rise due to the frictional heat generated between the rotating tools and the material to be joined and the shear stress due to the frictional force may be effectively imparted to the material to be joined, that is, the first electrical steel strip and the second electrical steel strip. Here, when $RS \times D^3/JS$ is less than 200 x TJ, the amount of heat generated is insufficient. Therefore, forming a joining interface in a metallurgically joined state at mating surfaces of the first electrical steel strip and the second electrical steel strip may become difficult. On the other hand, when $RS \times D^3/JS$ exceeds $2000 \times TJ$, the amount of heat generated by friction stirring becomes excessive, and an excessive amount of heat is injected into the joined portion. This increases the peak temperature (the maximum arrival temperature) and decreases the cooling rate of the joined portion, which leads to coarsening of the recrystallized microstructure of the joined portion. Therefore, the relationship of the above Expression (2) is satisfied for $RS \times D^3/JS$. $RS \times D^3/JS$ is preferably $280 \times TJ$ or more. $RS \times D^3/JS$ is preferably $1600 \times TJ$ or less.

When the rotation speeds RS and the shoulder diameters D of the rotating tools are different between the front side rotating tool and the back side rotating tool, the relationships of the above Expressions (1) and (2) are satisfied for the front side rotating tool and the back side rotating tool, respectively.

In the electrical steel strip friction stir welding method according to an embodiment of the present disclosure, it is preferred that the joining is performed under conditions that the steel microstructures of the joined portion and the thermo-mechanically affected zone formed by the joining of the first electrical steel strip and the second electrical steel strip respectively become mainly ferrite phase and the relationships of the following Expressions (3) to (6) are satisfied. As a result, even when electrical steel strips are used as the material to be joined, mechanical properties of the coil joint are improved without causing deterioration of the shape of the coil joint, and the occurrence of coil joint fractures in a production line is more effectively inhibited.

$$Dsz \leq 200 \ \mu m \qquad ...(3)$$

$$Dhaz1 \leq Dbm1 \qquad ...(4)$$

$$Dhaz2 \leq Dbm2 \qquad ...(5)$$

$$0.9 \times (Hbm1 + Hbm2)/2 \leq Hsz \leq 1.2 \times (Hbm1 + Hbm2)/2 \qquad ...(6)$$

Here,

Dsz is the average value ($\mu$m) of ferrite grain size of the joined portion,
Dhaz1 is the average value ($\mu$m) of ferrite grain size of the thermo-mechanically affected zone on the first electrical steel strip side,
Dhaz2 is the average value ($\mu$m) of ferrite grain size of the thermo-mechanically affected zone on the second electrical steel strip side,
Dbm1 is the average value ($\mu$m) of ferrite grain size of the base metal portion of the first electrical steel strip,
Dbm2 is the average value ($\mu$m) of ferrite grain size of the base metal portion of the second electrical steel strip,
Hsz is the average value of hardness of the joined portion,
Hbm1 is the average value of hardness of the base metal portion of the first electrical steel strip, and
Hbm2 is the average value of hardness of the base metal portion of the second electrical steel strip.

Further, in the electrical steel strip friction stir welding method according to an embodiment of the present disclosure, the joining is preferably performed under conditions satisfying the relationships of the following Expressions (7) and (8).

$$0.8 \times TbmL \leq TszL \qquad ...(7)$$

$$TszH \leq 1.3 \times TbmH \qquad ...(8)$$

Here,

TszL is the minimum value (mm) of the thickness of the joined portion,
TszH is the maximum value (mm) of the thickness of the joined portion,
TbmL is the thickness (mm) of the thinner of the first electrical steel strip and the second electrical steel strip, and
TbmH is the thickness (mm) of the thicker of the first electrical steel strip and the second electrical steel strip.

When the thicknesses of the first electrical steel strip and the second electrical steel strip are the same, TbmL = TbmH.

Description of the material to be joined (the first electrical steel strip and the second electrical steel strip), the joined portion, the thermo-mechanically affected zone, Expressions (3) to (8), and the like, is provided under section [2] Electrical steel strip welded joint, below.

In the electrical steel strip friction stir welding method according to an embodiment of the present disclosure, the tilt angle $\alpha$ of the rotating tools preferably satisfies the relationship of the following Expression (9).

$$0° < \alpha \leq 2° \qquad ...(9)$$

Here, $\alpha$ is the tilt angle of the axis of rotation of the rotating tool (hereinafter also referred to as tool rotation axis) from the thickness direction (direction perpendicular to the surface of the material to be joined) in a plane including the joining direction and the thickness direction (direction perpendicular to the surface of the material to be joined). The direction (angle) in which the lead end of the rotating tool leads the joining direction is +.

The rotating tool is formed of a material harder than the material to be joined. However, when a rotating tool made of a material with poor toughness, such as ceramic, is subjected to a force in a bending direction against the probe, stress concentrates locally and may lead to destruction. In this respect, when the tool rotation axis is tilted at an angle $\alpha$(°) from the thickness direction and the leading end of the probe leads the joining direction, the load on the rotating tool may be received by the rotating tool as a compressive force in the direction of the axis of rotation. This reduces force in the bending direction and helps avoid destruction of the rotating tool.

Here, when the tilt angle $\alpha$ of the rotating tool exceeds 0°, the effect described above is obtainable. However, when the tilt angle $\alpha$ of the rotating tool exceeds 2°, front and back surfaces of the joined portion tend to become concave. This decreases the minimum value of joined portion thickness relative to base metal thickness. As a result, joint strength is adversely affected, which may lead to the occurrence of coil joint fracture in a production line. Therefore, the tilt angle $\alpha$ of the rotating tool is preferably in the range of 0° < $\alpha$ ≤ 2° for both the front side rotating tool and the back side rotating tool.

Further, in the electrical steel strip friction stir welding method according to an embodiment of the present disclosure, the gap G (mm) between the shoulders of the rotating tools preferably satisfies the relationship of the following Expression (10).

$$0.5 \times TJ - 0.1 \times D \times \sin\alpha \le G \le 0.9 \times TJ - 0.1 \times D \times \sin\alpha \qquad ...(10)$$

In other words, in double-sided friction stir welding, appropriately controlling the gap G between the shoulders of the rotating tools (hereinafter also simply referred to as shoulder gap G) is advantageous from the viewpoint of achieving a high joining speed while inhibiting defect occurrence during joining. The shoulder gap G may be said to be the separation distance in the thickness direction between the shoulder of the front side rotating tool and the shoulder of the back side rotating tool. In particular, when the shoulder gap G is in the range from 0.5 × TJ - 0.1 × D × sin$\alpha$ to 0.9 × TJ - 0.1 × D × sin$\alpha$, the shoulders of the rotating tools facing each other are in close contact with or pushed into the front side and the back side of the material to be joined. As a result, the material to be joined is pressed by the shoulders of the rotating tools from both the front side and the back side with sufficient load, which is advantageous in achieving high joining speed while inhibiting defect occurrence during joining. Therefore, the shoulder gap G is preferably in the range from 0.5 × TJ - 0.1 × D × sin$\alpha$ to 0.9 × TJ - 0.1 × D × sin$\alpha$.

Conditions other than the above are not particularly limited as long as conditions satisfy the relationships of the above Expressions (1) and (2), and may be in accordance with conventional methods.

For example, the rotation speed of the rotating tools is preferably 300 r/min to 9000 r/min. Keeping the rotation speed of the rotating tools in this range inhibits degradation of mechanical properties due to excessive heat input while maintaining a good surface profile, and is therefore advantageous. The rotation speed of the rotating tools is more preferably 400 r/min or more. The rotation speed of the rotating tools is more preferably 8000 r/min or less.

The joining speed is preferably 800 mm/min to 5000 mm/min. The joining speed is more preferably 1000 mm/min or more. The joining speed is more preferably 4000 mm/min or less.

The positions of the lead ends of the rotating tools, indentation load, rotation torque, gap between probes, and the like may be set according to conventional methods.

As illustrated in FIG. 1A to FIG. 1D, in the double-sided friction stir welding, the direction of rotation of the front side rotating tool and direction of rotation of the back side rotating tool are opposed when viewed from the front (or back) side of the material to be joined. The rotation speed of the front side rotating tool is preferably the same as the rotation speed of the back side rotating tool. This allows the rotation torques applied to the material to be joined from the front side rotating tool and the back side rotating tool to cancel each other out. As a result, the structure of the jig that holds the material to be joined may be simplified compared to the one-sided friction stir welding method, in which the unjoined portion is pressed from one side.

Further, when the rotation direction of the front side rotating tool and the rotation direction of the back side rotating tool are in the same direction as viewed from the front (or back) side of the material to be joined, the relative speed of one rotating tool to the other approaches zero. As a result, the plastic flow of the material to be joined approaches a homogeneous state and plastic deformation is reduced. Therefore, achieving a good joined state is difficult because heat generation due to plastic deformation of the material is also not obtained. Therefore, from the viewpoint of uniformly obtaining sufficient temperature increase and shear stress in the thickness direction of the material to be joined to achieve a good joined state, making the direction of rotation of the front side rotating tool and the direction of rotation of the back side rotating tool opposed when viewed from the front (or back) side of the material to be joined is effective.

Further, the rotating tools used in the electrical steel strip friction stir welding method according to an embodiment of the present disclosure are also not particularly limited, as long as the relationship of the above Expression (1) is satisfied, and may be in accordance with conventional methods.

For example, the lead ends of the rotating tools are in contact with the material to be joined, that is, the first electrical steel strip and the second electrical steel strip, during joining. Accordingly, the lead ends of the rotating tools are made of a harder material than the first electrical steel strip and the second electrical steel strip under the high temperature conditions during joining. This allows the rotating tools to apply deformation to the first electrical steel strip and the second electrical steel strip while maintaining the shape of the lead ends during joining. As a result, high stirring capacity is continuously achievable, enabling proper joining. The hardness of the lead ends of the rotating tools, the first electrical steel strip, and the second electrical steel strip may be measured and compared by a high temperature Vickers hardness test. It may suffice that only the lead ends of the rotating tools are made of a material harder than the first electrical steel strip and the second electrical steel strip. Alternatively, the rotating tools may entirely be made of a material harder than the first electrical steel strip and the second electrical steel strip.

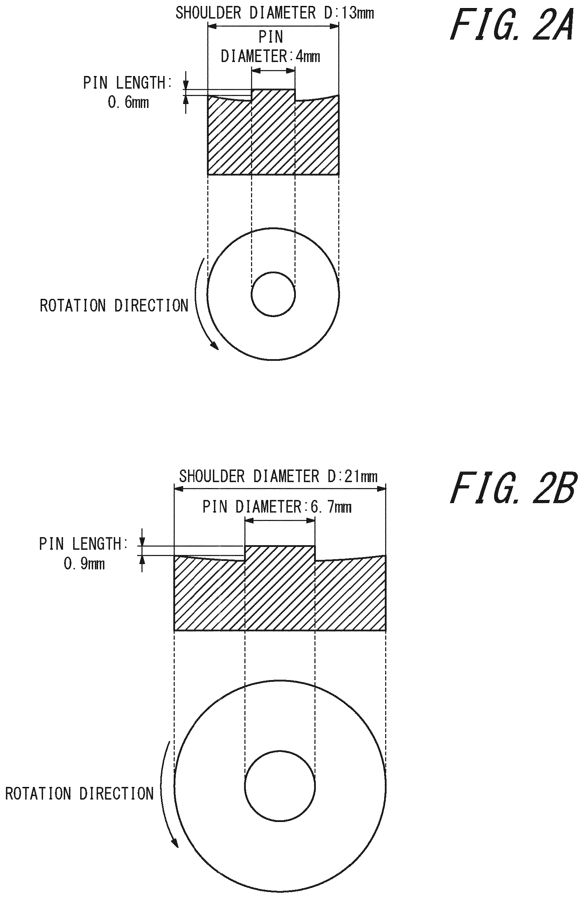

FIG. 2A and FIG. 2B illustrate examples of rotating tools with probes. As illustrated in FIG. 2A and FIG. 2B, the lead ends of the rotating tools with probes each include a shoulder (the range indicated by the shoulder diameter in the drawings) and a probe (the range indicated by the pin diameter in the drawings) disposed on the shoulder and sharing the axis of rotation with the shoulder.

In the rotating tool example illustrated in FIG. 2A, the rotating tool has shoulder diameter D: 13 mm, pin diameter: 4 mm, pin length: 0.6 mm, and concavity depth (not labelled): 0.3 mm.

In the rotating tool example illustrated in FIG. 2B, the rotating tool has a shoulder diameter D: 21 mm, pin diameter: 6.7 mm, pin length: 0.9 mm, and concavity depth (not labelled): 0.3 mm.

In the rotating tool with a probe, the shoulder presents a flat shape formed by a substantially flat or gently curved surface. The shoulder functions to generate frictional heat through contact with the first electrical steel strip and the second electrical steel strip while rotating during joining. Further, the shoulder functions to press on the heat-softened region to prevent material from separating and to promote plastic flow in the direction of rotation.

The probe is a discontinuous shape with the shoulder and protrudes substantially perpendicularly toward the material to be joined (not illustrated). The probe functions to improve the stirring capacity in the vicinity of the mid-thickness part by penetrating in the mid-thickness direction of the softened portions of the first electrical steel strip and the second electrical steel strip during joining. Further, the probe is typically located in the center of the shoulder.

For the shoulder diameter D (mm), the relationship of the above Expressions (1) and (2) is satisfied, as described above. Further, the pin diameter and the pin length of each of the rotating tools are not particularly limited, and may be set as needed in accordance with conventional methods. For example, when butt-joining the first electrical steel strip and the second electrical steel strip having different thicknesses, an average thickness of the first electrical steel strip and the second electrical steel strip may be considered and the pin diameter, the pin length, and the like of the rotating tools may be set according to conventional methods. Further, when overlap joining the first electrical steel strip and the second electrical steel strip, the total thickness of the first electrical steel strip and the second electrical steel strip may be considered and the pin diameter, the pin length, and the like of the rotating tools may be set according to conventional methods.

Further, as mentioned above, the probe functions to improve the stirring capacity in the vicinity of the mid-thickness part by penetrating in the mid-thickness direction of the softened portions of the first electrical steel strip and the second electrical steel strip during joining. However, the probe is subjected to greater stress than the shoulder. In this regard, in the electrical steel strip friction stir welding method according to an embodiment of the present disclosure, the double-sided friction stir welding is applied as the joining method, and the relationships of the above Expressions (1) and (2) are both satisfied, which further enhances the stirring function. Accordingly, use of a rotating tool without a probe is possible. Rotating tools without probes are more durable than rotating tools with probes. Therefore, use of rotating tools without probes is preferable in terms of durability and extended service life of the rotating tools, and thus in reducing joint failure rates (failures caused by wear and breakage of the rotating tools).

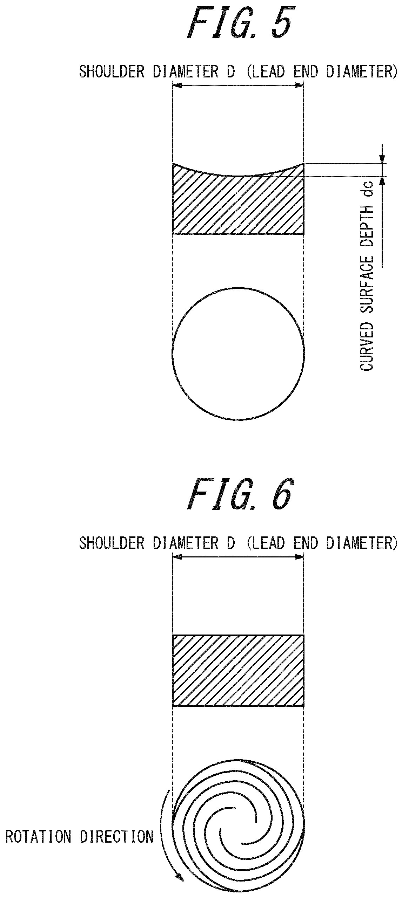

FIG. 3 to FIG. 5 illustrate examples of rotating tools without probes. FIG. 3 illustrates an example of a rotating tool without a probe that has a flat leading end (hereinafter also referred to as a flat-end rotating tool). FIG. 4 illustrates an example of a rotating tool without a probe that has a convex curved leading end (hereinafter also referred to as a convex-end rotating tool). FIG. 5 illustrates an example of a rotating tool without a probe that has a concave curved leading end (hereinafter also referred to as a concave-end rotating tool).

As illustrated in FIG. 3 to FIG. 5, the lead end of a rotating tool without a probe consists only of a shoulder. In other words, the lead end of the rotating tool without a probe does not have a portion (probe) protruding substantially perpendicularly toward the material to be joined that forms a discontinuous shape with the shoulder. The leading end of the rotating tool is preferably, for example, a flat surface as illustrated in FIG. 3, a convex curved surface as illustrated in FIG. 4, or a concave curved surface as illustrated in FIG. 5. Further, the shape of the lead end in the plane perpendicular to the tool rotation axis (the projected area when the leading end face of the rotating tool is projected in the direction parallel to the axis of rotation) is circular.

In a flat-end rotating tool as illustrated in FIG. 3, for example, the leading end in contact with the material to be joined consists of one plane perpendicular to the tool rotation axis.

In a convex-end rotating tool as illustrated in FIG. 4, for example, the leading end in contact with the material to be joined has a continuous shape with no probe and a substantially uniformly sloped surface. More specifically, the leading end constitutes a single curved surface (paraboloid, prolate spherical, or spherical) projecting from the periphery toward the center. Further, as illustrated in FIG. 4, a cross section of the leading end (cross section including and parallel to the axis of rotation) has a curved shape with a substantially uniform curvature radius. In addition, the relationship of the following Expression (11) is preferably satisfied for the curved surface height dv (mm) and the shoulder diameter D (mm).

$$dv/D \leq 0.06 \qquad \ldots(11)$$

In other words, by setting dv/D to 0.06 or less, pressure may be applied more effectively to a flow zone when the lead end of the rotating tool contacts the material to be joined, and plastic flow may be generated more effectively. On the other hand, when dv/D exceeds 0.06, the front surface and the back surface of the joined portion may become excessively concave, and the thickness of the joined portion may become small relative to the thickness of the steel strip. In such cases, ensuring joint strength becomes difficult, which is undesirable. A lower limit of dv/D is not particularly limited. From the viewpoint of applying pressure more effectively to the flow zone, dv/D is preferably 0.01 or more.

In a concave-end rotating tool as illustrated in FIG. 5, the leading end in contact with the material to be joined has a continuous shape with no probe and a substantially uniformly sloped surface. More specifically, the leading end constitutes a single curved surface (paraboloid, prolate spherical, or spherical) recessing from the periphery toward the center. Further, as illustrated in FIG. 5, a cross section of the leading end (cross section including and parallel to the axis of rotation) has a curved shape with a substantially uniform curvature radius. In addition, the relationship of the following Expression (12) is preferably satisfied for the curved surface depth dc (mm) and the shoulder diameter D (mm).

$$dc/D \leq 0.03 \qquad \ldots(12)$$

By setting dc/D to 0.03 or less, softened metal fills the concave curved surface of the lead end during joining. Accordingly, pressure may be applied more effectively to the flow zone when the lead end of the rotating tool contacts the material to be joined, and plastic flow may be generated more effectively. On the other hand, when dc/D exceeds 0.03, effectively applying pressure to the flow zone to generate sufficient plastic flow may be difficult, which is not desirable. A lower limit of dc/D is not particularly limited. From the viewpoint of applying pressure more effectively to the flow zone, dv/D is preferably 0.01 or more.

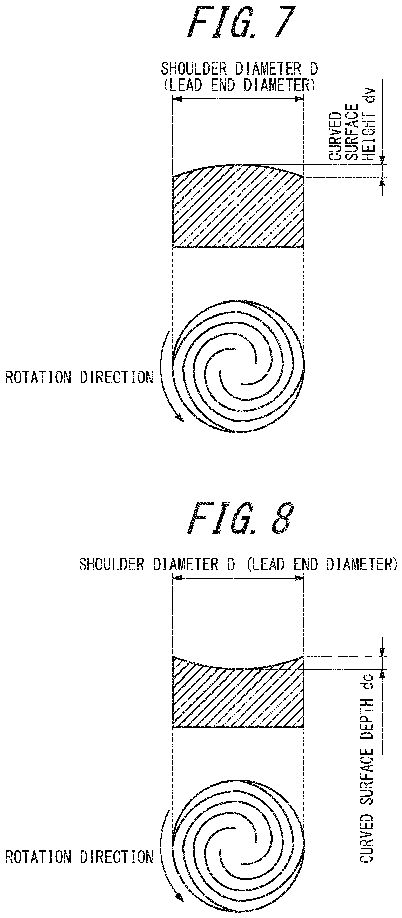

Further, from the viewpoint of further promoting material flow, the leading end of the rotating tool preferably has a spiral-shaped (helical) stepped portion spiraling in the direction opposite rotation. The spiral-shaped stepped portion is defined, for example, by a radial curve (spiral) starting from the center of the leading end of the rotating tool or the periphery of a central circle of the leading end of the rotating tool, as illustrated in FIG. 6 to FIG. 8, and extending to the outer edge of the leading end of the rotating tool. The central circle of the leading end of the rotating tool is a circle of any diameter centered at the center of the leading end of the rotating tool. In FIG. 6 to FIG. 8, the number of spirals is four in each case.

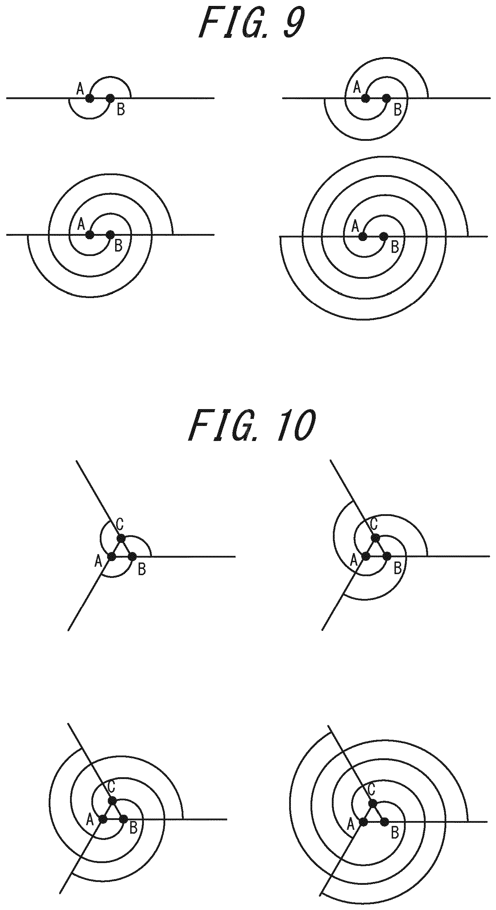

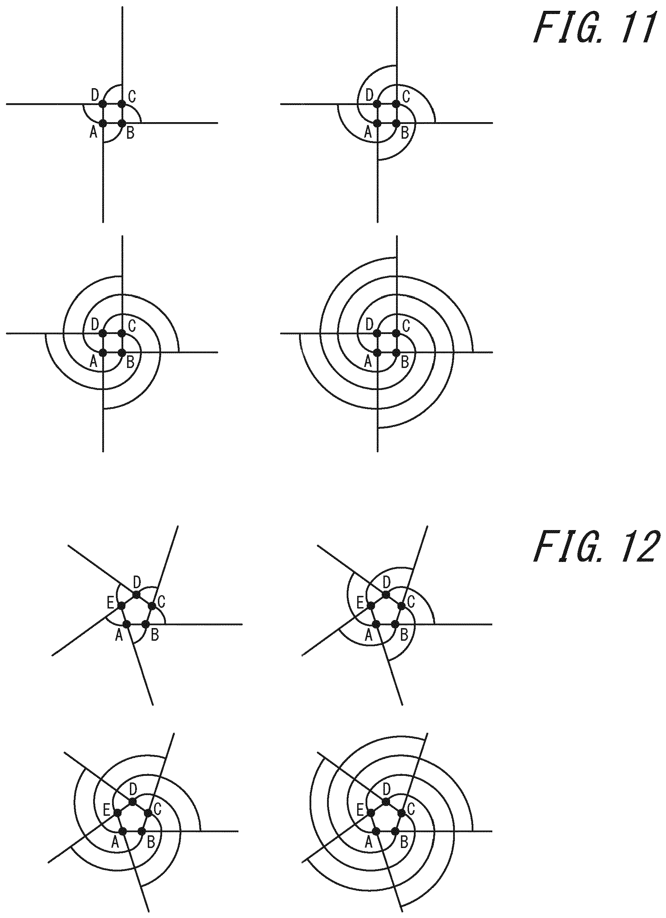

The number of spirals defining the stepped portion may be one or more. However, when the number of spirals defining the stepped portion exceeds six, not only is an effect of promoting material flow lessened, but increased susceptibility to breakage becomes a risk due increased shape complexity. Accordingly, the number of spirals defining the stepped portion is preferably six or less. FIG. 9 to FIG. 13 illustrate examples of cases where the number of spirals defining the stepped portion is from two to six.

Further, from the viewpoint of preventing damage to the lead end of the rotating tool while improving material flow, the number of spirals defining the stepped portion is preferably adjusted according to the shoulder diameter. For example, the larger the shoulder diameter, the greater the number of spirals defining the stepped portion, and the smaller the shoulder diameter, the smaller the number of spirals defining the stepped portion. Specifically, when the shoulder diameter is less than 6 mm, the number of spirals defining the stepped portion is preferably two or less. On the other hand, when the shoulder diameter is 6 mm or more, the number of spirals defining the stepped portion is preferably 3 to 6.

When there are two spirals defining the stepped portion and the spirals are equally spaced, semicircles are drawn with the line segment A-B as radii, starting from point A and point B, respectively, as illustrated in FIG. 9. Then, semicircles having a radius twice the length of the line segment A-B are respectively drawn. Then, semicircles having a radius three times the length of the line segment A-B are respectively drawn. By repeating this process, two equally spaced spirals may be drawn.

When a number n of spirals defining the stepped portion is 3 to 6 and the spirals are equally spaced, as illustrated in FIG. 10 to FIG. 13, a regular n-gon is drawn, and with each vertex of the n-gon as a center start point, an arc with a radius equal to the length of a side of the regular n-gon is drawn to a point where the arc intersects an extension of a side. Then, using the vertex next to the previous vertex as a center, an arc of radius twice the length of the side of the regular n-gon is drawn to the point where the arc intersects the next extension of a side. Then, using the vertex next to the previous vertex as a center, an arc of radius three times the length of the side of the regular n-gon is drawn to the point where the arc intersects the next extension of a side. By repeating this process, n equally spaced spirals may be drawn.

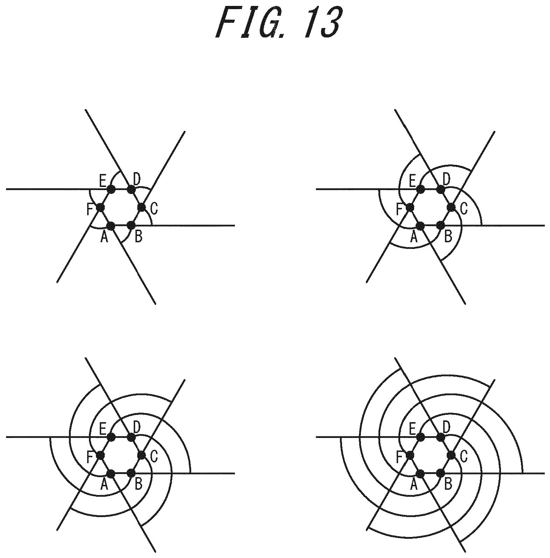

In the case of FIG. 9 to FIG. 13, the number of spirals may be one. In the case of FIG. 9, FIG. 11, and FIG. 13, the number of spirals may be two and the spirals may be equally spaced. In the case of FIG. 10 and FIG. 13, the number of spirals may be three and the spirals may be equally spaced.

In addition, the length of each spiral is preferably 0.5 circumferences of the leading end or more. The length of each spiral is preferably 2 circumferences of the leading end or less. The length of each spiral is preferably adjusted according to the shoulder diameter. For example, preferably, the larger the shoulder diameter, the longer the spiral length, and the smaller the shoulder diameter, the shorter the spiral length.

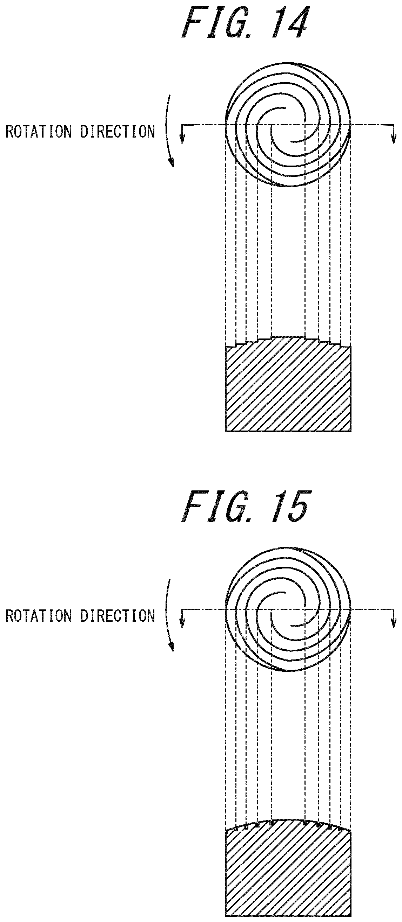

In one example of a convex-end rotating tool, the stepped portion is formed by a step-like change in height for each inter-spiral region, as illustrated in FIG. 14. For example, the stepped portion is structured by gradually lowering the leading end from the center to the periphery. In the case of a concave-end rotating tool, the stepped portion is structured by gradually raising the leading end from the center to the periphery. Hereinafter, this form of the stepped portion is also referred to as step-like. The number of steps in the stepped portion is preferably one or more. Further, in a cross section including and parallel to the axis of rotation (cross section in FIG. 14), each step may be substantially horizontal, for example.

In another example of a convex-end rotating tool, the stepped portion is formed by providing a recessed region (hereinafter also referred to as a groove) recessed from the leading end at the spiral location, as illustrated in FIG. 15. This forms a stepped portion that gradually lowers from the center of the leading end toward the periphery. In the case of a concave-end rotating tool, the stepped portion is formed that gradually rises from the center of the leading end toward the periphery. Hereinafter, this form of the stepped portion is also referred to as grooved. Examples of cross section shapes of the grooves include a U shape, a V shape, and a check-mark shape. The number of steps in the stepped portion is preferably one or more.

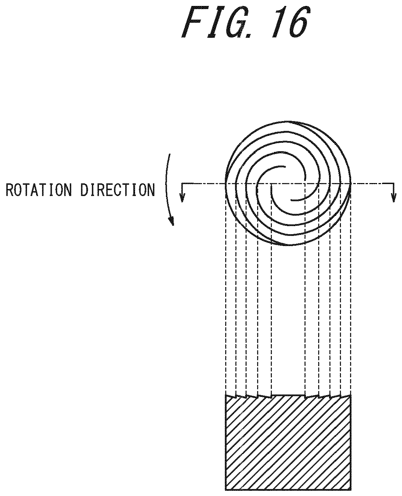

In one example of a flat-end rotating tool, the stepped portion is formed by providing a groove at the spiral location, as illustrated in FIG. 16. Examples of groove shapes include a U shape, a V shape, and a check-mark shape. The number of steps in the stepped portion is preferably one or more.

By providing the stepped portion as described above, the metal material softened by frictional heat flows from the outside to the inside of the rotating tool during pressing and stirring of the material to be joined by the rotating tool. This inhibits metal material flowing out of a pressed zone due to the rotating tool. As a result, plastic flow in the pressed zone is promoted. Further, the thickness of the joined portion may be prevented from decreasing relative to the base metal and a beautiful, burr-free joined portion surface may be formed.

A base portion on the opposite side of the rotating tool from the lead end is preferably able to be attached to commonly conventionally used double-sided friction stir welding equipment, and the shape of the base portion is not particularly restricted.

Electrical steel strip welded joint

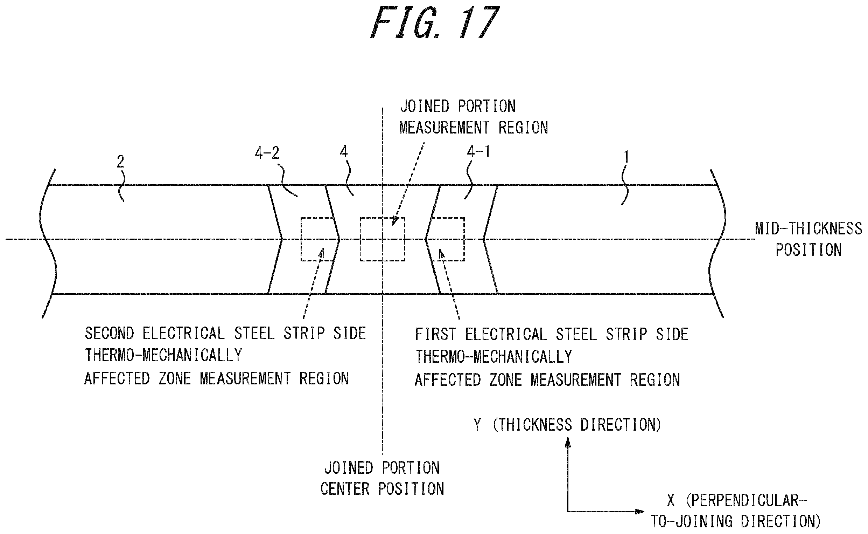

The following is a description of an electrical steel strip welded joint, with reference to FIG. 17. In the drawing, reference sign 1 indicates the first electrical steel strip (material to be joined), 2 indicates the second electrical steel strip (material to be joined), 4 indicates the joined portion, 4-1 indicates the thermo-mechanically affected zone (first electrical steel strip side), and 4-2 indicates the thermo-mechanically affected zone (second electrical steel strip side). FIG. 17 illustrates a thickness direction cross section view of the electrical steel strip welded joint. In the drawing, the vertical direction is the thickness direction. The horizontal direction is the perpendicular-to-joining direction. The direction perpendicular to the plane of the paper towards the reader is the joining direction. That is, the plane illustrated in FIG. 17 (the thickness direction cross section) includes the perpendicular-to-joining direction and the thickness direction.

The above-mentioned electrical steel strip welded joint is:

an electrical steel strip welded joint, joining the first electrical steel strip and the second electrical steel strip, the electrical steel strip welded joint including a joined portion and a thermo-mechanically affected zone adjacent to the joined portion, where
the steel microstructures of the joined portion and the thermo-mechanically affected zone are mainly ferrite phase, respectively, and
the following Expressions (3) to (6) are satisfied.

$$\mathrm{Dsz} \leq 200\ \mu\mathrm{m} \qquad \ldots(3)$$

$$Dhaz1 \leq Dbm1 \qquad ...(4)$$

$$Dhaz2 \leq Dbm2 \qquad ...(5)$$

$$0.9 \times (Hbm1 + Hbm2)/2 \leq Hsz \leq 1.2 \times (Hbm1 + Hbm2)/2 \qquad ...(6)$$

Here,

Dsz is the average value ($\mu$m) of ferrite grain size of the joined portion,
Dhaz1 is the average value ($\mu$m) of ferrite grain size of the thermo-mechanically affected zone on the first electrical steel strip side,
Dhaz2 is the average value ($\mu$m) of ferrite grain size of the thermo-mechanically affected zone on the second electrical steel strip side,
Dbm1 is the average value ($\mu$m) of ferrite grain size of the base metal portion of the first electrical steel strip,
Dbm2 is the average value ($\mu$m) of ferrite grain size of the base metal portion of the second electrical steel strip,
Hsz is the average value of hardness of the joined portion,
Hbm1 is the average value of hardness of the base metal portion of the first electrical steel strip, and
Hbm2 is the average value of hardness of the base metal portion of the second electrical steel strip.

Further, the electrical steel strip welded joint may be obtained (produced), for example, by the electrical steel strip friction stir welding method according to an embodiment of the present disclosure, described above.

[Material to be joined (first electrical steel strip and second electrical steel strip)]

The first electrical steel strip and the second electrical steel strip are electrical steel strips that are the material to be joined. The chemical compositions of the first electrical steel strip and the second electrical steel strip are not particularly limited as long as the chemical compositions are typical of electrical steel strips (electrical steel sheets) at a cold rolling stage.
In accordance with the invention, the first and second electrical strips each have a chemical composition containing C: 0.005 mass% or less, Si: 2.0 mass% to 5.0 mass%, A1: 3.0 mass% or less, Mn: 2.00 mass% or less, P: 0.2 mass% or less, S: 0.01 mass% or less, and N: 0.01 mass% or less, with the balance being Fe and inevitable impurity. The above chemical composition may contain at least one selected from the group consisting of, in mass%: Sn: 0.2 % or less, Sb: 0.2 % or less, Ca: 0.01 % or less, REM: 0.05 % or less, and Mg: 0.01 % or less. Further, the above chemical compositions may contain at least one element selected from the group consisting of, in mass%: Cr: 1 % or less, Ni: 1 % or less, and Cu: 1 % or less. Elements other than Si and Fe may each be 0 %.
Further, the chemical compositions of the first electrical steel strip and the second electrical steel strip may be the same or different.
The thickness t1 of the first electrical steel strip and the thickness t2 of the second electrical steel strip are not particularly limited. t1 and t2 are respectively preferably 1.2 mm to 3.2 mm. t1 and t2 may be the same or different.
Further, in the material to be joined, that is, the first electrical steel strip and the second electrical steel strip, a region not affected by hot working due to frictional heat and plastic flow is called the base metal portion.
Further, the base metal portion, as well as the joined portion and the thermo-mechanically affected zone described below, are defined as follows.
The electrical steel strip welded joint is cut in the thickness (vertical) direction so that the plane illustrated in FIG. 17 (that is, the plane including the perpendicular-to-joining direction and the thickness direction) is the cross section. The cross section is then polished and etched with a saturated picric acid solution, nital (a solution of nitrate and ethanol) or aqua regia (a solution of concentrated hydrochloric acid and concentrated nitrate mixed in a 3:1 volume ratio). The cross section is then observed under an optical microscope to determine the degree of etching and the like, and to delineate the base metal portion, the joined portion, and the thermo-mechanically affected zone.

[Joined portion]

The joined portion is the region that undergoes hot working due to frictional heat and plastic flow between the rotating tool and the material to be joined, resulting in a recrystallized microstructure.
The joined portion is composed of a mainly ferrite phase steel microstructure, specifically, with ferrite phase having an area ratio of 95 % or more. The area ratio of the ferrite phase may be 100 %. The area ratio of the residual microstructure other than the ferrite phase is 5 % or less. As the residual microstructure other than the ferrite phase, examples include secondary phases such as martensite, sulfides, nitrides, carbides, and the like. The area ratio of the residual microstructure may be 0 %.

The area ratio of the ferrite phase is measured as follows.

A test piece is cut from the electrical steel strip welded joint so that a joined portion measurement region, described below, is included in an observation plane. The observation plane is the plane illustrated in FIG. 17 (that is, the plane that includes the perpendicular-to-joining direction and the thickness direction). The observation plane of the test piece is then polished and etched with 3 vol% nital, saturated picric acid solution or aqua regia to reveal the microstructure. Then, in the joined portion measurement region, described below, a total of ten fields of view are captured with an optical microscope at a magnification of 500×. From the obtained microstructure images, the area of ferrite phase is calculated for the ten fields of view using Adobe Photoshop, sold by Adobe Systems Inc. The area of ferrite phase calculated for each field of view is then divided by the area of the field of view and multiplied by 100. The arithmetic mean of those values is then used as the area ratio of the ferrite phase.

Further, refinement of the steel microstructure of the joined portion is important. Specifically, reducing grain size of ferrite crystal grains of the steel microstructure of the joined portion (hereinafter also referred to as ferrite grain size) to satisfy the relationship of the following Expression (3) is important. As a result, even when electrical steel strips are used as the material to be joined, mechanical properties of the coil joint are improved without causing deterioration of the shape of the coil joint, and the occurrence of coil joint fractures in a production line is effectively inhibited.

$$\mathrm{Dsz} \leq 200\ \mu\mathrm{m} \qquad \ldots(3)$$

Here,

Dsz is the average value ($\mu$m) of ferrite grain size of the joined portion.

Here, Dsz is measured in accordance with Japanese Industrial Standard JIS G 0551. Specifically, measurement is made as follows.

The electrical steel strip welded joint is cut in the thickness (vertical) direction so that the plane illustrated in FIG. 17 (that is, the plane including the perpendicular-to-joining direction and the thickness direction) is the cross section. In the cross section, the X axis is the perpendicular-to-joining direction and the Y axis is the thickness direction. The origin of the X axis and the Y axis is the center position of the joined portion in the perpendicular-to-joining direction and the mid-thickness position of the material to be joined in the thickness (vertical) direction. The center position of the joined portion in the perpendicular-to-joining direction is, for example, the center position of the butt gap in the case of a butt joint or the center position of the overlapped portion in the case of a lap joint. The mid-thickness position of the material to be joined in the thickness (vertical) direction is, for example, the mid-thickness position of the smaller of the first electrical steel strip and the second electrical steel strip in the case of a butt joint, or the mid-thickness position of the overlapped portion in the case of a lap joint. A region defined as X = -0.2 × t to +0.2 × t and Y = -0.2 × t to +0.2 × t is the measurement region. Here, t is an average value (mm) of thickness of the first electrical steel strip and thickness of the second electrical steel strip. However, when the measurement region includes a region that is not the joined portion, such as the thermo-mechanically affected zone or the base metal portion, such a region is excluded from the measurement region. For the X axis and the Y axis, + and - may be set arbitrarily.

Then, at any position in the measurement region, ferrite grain size of the joined portion is measured a total of five times by the cutting method (evaluated by the number of crystal grains captured per 1 mm of a test line or the number P of intersections) in accordance with JIS G 0551 "Steels - Micrographic determination of the apparent grain size", and the average value of these measurements is Dsz. The measurement region of ferrite grain size of the joined portion is hereinafter also referred to simply as the joined portion measurement region.

Further, reducing a hardness difference between the joined portion and the base metal portion, specifically to satisfy the relationship of the following Expression (6), is important. As a result, even when electrical steel strips are used as the material to be joined, mechanical properties of the coil joint are improved without causing deterioration of the shape of the coil joint, and the occurrence of coil joint fractures in a production line is effectively inhibited.

$$0.9 \times (\mathrm{Hbm1} + \mathrm{Hbm2})/2 \leq \mathrm{Hsz} \leq 1.2 \times (\mathrm{Hbm1} + \mathrm{Hbm2})/2 \qquad \ldots(6)$$

Here,

Hsz is the average value of hardness of the joined portion,
Hbm1 is the average value of hardness of the base metal portion of the first electrical steel strip, and
Hbm2 is the average value of hardness of the base metal portion of the second electrical steel strip.

Here, Hsz, Hbm1, and Hbm2 are measured in accordance with JIS Z 2244. Specifically, each is measured as follows.

Vickers hardness (HV) is measured at any five locations in the joined portion measurement region on the cross section under a condition of test force: 4.9 N. The average of these values is then taken as Hsz.

Further, on the cross section, Vickers hardness (HV) is measured at any five locations in a region $\pm 0.2 \times t1$ (level in the thickness (vertical) direction) from the mid-thickness position of the base metal portion of the first electrical steel strip and any five locations in a region $\pm 0.2 \times t2$ (level in the thickness (vertical) direction) from the mid-thickness position of the base metal portion of the second electrical steel strip, under the test force: 4.9 N. The position along the perpendicular-to-joining (horizontal) direction may be selected arbitrarily, as long as the position is in the base metal portion. The average values of Vickers hardness (HV) measured on the base metal portion of the first electrical steel strip and the base metal portion of the second electrical steel strip are Hbm1 and Hbm2, respectively. Here, t1 and t2 are the thicknesses of the first electrical steel strip and the second electrical steel strip, respectively.

Further, the thickness of the joined portion is not particularly limited. Appropriate control of the relationship between the thicknesses of the first electrical steel strip and the second electrical steel strip, specifically satisfying the relationships of the following Expressions (7) and (8), is preferred. As a result, even when electrical steel strips are used as the material to be joined, mechanical properties of the coil joint are further improved without causing deterioration of the shape of the coil joint, and the occurrence of coil joint fractures in a production line may be more effectively inhibited.

$$0.8 \times TbmL \leq TszL \qquad ...(7)$$

$$TszH \leq 1.3 \times TbmH \qquad ...(8)$$

Here,

TszL is the minimum value (mm) of the thickness of the joined portion,
TszH is the maximum value (mm) of the thickness of the joined portion,
TbmL is the thickness (mm) of the thinner of the first electrical steel strip and the second electrical steel strip, and
TbmH is the thickness (mm) of the thicker of the first electrical steel strip and the second electrical steel strip, and
When the thicknesses of the first electrical steel strip and the second electrical steel strip are the same, TbmL = TbmH.

TszL and TszH may be measured as follows, for example. The electrical steel strip welded joint is cut in the thickness (vertical) direction so that the plane illustrated in FIG. 17 (that is, the plane including the perpendicular-to-joining direction and the thickness direction) is the cross section. Then, TszL and TszH are measured at the cross section using a caliper or the like.

[Thermo-mechanically affected zone]

The thermo-mechanically affected zone is adjacent to the joined portion and is a region affected by hot working due to frictional heat and plastic flow, but the temperature and working are insufficient to reach a recrystallized microstructure. Further, the thermo-mechanically affected zone is formed on both sides of the first electrical steel strip and the second electrical steel strip adjacent to the joined portion.

The thermo-mechanically affected zone, like the joined portion, is composed of a mainly ferrite phase steel microstructure, specifically, a ferrite phase having an area ratio of 95 % or more. The area ratio of the ferrite phase may be 100 %. The area ratio of the residual microstructure other than the ferrite phase is 5 % or less. As the residual microstructure other than the ferrite phase, examples include secondary phases such as martensite, sulfides, nitrides, carbides, and the like. The area ratio of the residual microstructure may be 0 %. The area ratio of the ferrite phase may be measured by the same method as described above.

Further, refinement of the steel microstructure of the thermo-mechanically affected zone is important. Specifically, making ferrite grain size in the thermo-mechanically affected zone equal to or less than the ferrite grain size in the base metal portion, that is, satisfying the relationships of the following Expressions (4) and (5), is important.

$$Dhaz1 \leq Dbm1 \qquad ...(4)$$

$$Dhaz2 \leq Dbm2 \qquad ...(5)$$

Here,

Dhaz1 is the average value (μm) of ferrite grain size of the thermo-mechanically affected zone on the first electrical steel strip side,

Dhaz2 is the average value (μm) of ferrite grain size of the thermo-mechanically affected zone on the second electrical steel strip side,

Dbm1 is the average value (μm) of ferrite grain size of the base metal portion of the first electrical steel strip, and

Dbm2 is the average value (μm) of ferrite grain size of the base metal portion of the second electrical steel strip.

Here, Dhaz1, Dhaz2, Dbm1, and Dbm2 are measured in the same manner as Dsz, the average value of ferrite grain size of the joined portion, according to JIS G 0551.

Further, the measurement region of the ferrite grain size of the thermo-mechanically affected zone on the first electrical steel strip side (hereinafter also referred to as the first electrical steel strip side thermo-mechanically affected zone measurement region) is set as follows. The electrical steel strip welded joint is cut in the thickness (vertical) direction so that the plane illustrated in FIG. 17 (that is, the plane including the perpendicular-to-joining direction and the thickness direction) is the cross section. In the cross section, the X axis is the perpendicular-to-joining direction and the Y axis is the thickness direction. A boundary position between the joined portion and the thermo-mechanically affected zone on the first electrical steel strip side at the mid-thickness position (level) of the first electrical steel strip is the origin of the X axis and the Y axis. For the X axis, the first electrical steel strip side is + and the joined portion side is -, and the measurement region is a region defined as $X = 0$ to $+0.4 \times t1$ and $Y = -0.2 \times t1$ to $+0.2 \times t1$. Here, $t1$ is the thickness of the first electrical steel strip. For the Y axis, + and - may be set arbitrarily. However, when the measurement region includes a region that is not the thermo-mechanically affected zone on the first electrical steel strip side, such as the joined portion or the base metal portion, such a region is excluded from the measurement region.

As mentioned above, the joined portion is the region that undergoes hot working due to frictional heat and plastic flow between the rotating tool and the material to be joined, resulting in a recrystallized microstructure. The thermo-mechanically affected zone is a region adjacent to the joined portion and is affected by hot working due to frictional heat and plastic flow, but the temperature and working are insufficient to reach a recrystallized microstructure. The base metal is the region unaffected by hot working due to frictional heat and plastic flow.

Similarly, the measurement region of the ferrite grain size of the thermo-mechanically affected zone on the second electrical steel strip side (hereinafter also referred to as the second electrical steel strip side thermo-mechanically affected zone measurement region) is set as follows. The electrical steel strip welded joint is cut in the thickness (vertical) direction so that the plane illustrated in FIG. 17 (that is, the plane including the perpendicular-to-joining direction and the thickness direction) is the cross section. In the cross section, the X axis is the perpendicular-to-joining direction and the Y axis is the thickness direction. A boundary position between the joined portion and the thermo-mechanically affected zone on the second electrical steel strip side at the mid-thickness position (level) of the second electrical steel strip is the origin of the X axis and the Y axis. For the X axis, the second electrical steel strip side is + and the joined portion side is -, and the measurement region is a region defined as $X = 0$ to $+0.4 \times t2$ and $Y = -0.2 \times t2$ to $+0.2 \times t2$. Here, $t2$ is the thickness of the second electrical steel strip. For the Y axis, + and - may be set arbitrarily. However, when the measurement region includes a region that is not the thermo-mechanically affected zone on the second electrical steel strip side, such as the joined portion or the base metal portion, such a region is excluded from the measurement region.

Further, the measurement regions of ferrite grain size of the base metal portions of the first electrical steel strip and the second electrical steel strip (hereinafter also referred to as the first electrical steel strip and second electrical steel strip base metal portion measurement regions) may be, on the cross section, a region of $\pm 0.2 \times t1$ from the mid-thickness position of the base metal portion of the first electrical steel strip (level in the thickness (vertical) direction) and a region of $\pm 0.2 \times t2$ from the mid-thickness position of the base metal portion of the second electrical steel strip (level in the thickness (vertical) direction), respectively. The position along the perpendicular-to-joining (horizontal) direction may be selected arbitrarily, as long as the position is in the base metal portion. Here, $t1$ and $t2$ are the thicknesses of the first electrical steel strip and the second electrical steel strip, respectively.

Examples of joint types include butt joints and lap joints.

Method of producing electrical steel strip

The following describes a method of producing an electrical steel strip according to an embodiment of the present disclosure.

The method of producing an electrical steel strip according to an embodiment of the present disclosure includes:

joining a first electrical steel strip and a second electrical steel strip by the electrical steel strip friction stir welding method according to an embodiment of the present disclosure to obtain a joined steel strip; and

cold rolling the joined steel strip to obtain an electrical steel strip (cold-rolled steel strip).

Here, the joined steel strip preferably includes the first electrical steel strip, the second electrical steel strip, and the electrical steel strip welded joint according to an embodiment of the present disclosure, where the first electrical steel strip and the second electrical steel strip are joined via the electrical steel strip welded joint according to an embodiment of the present disclosure.

Further, cold rolling conditions are not particularly limited, and may be in accordance with a conventional method. Further, pickling may optionally be performed prior to cold rolling.

EXAMPLES

Functions and effects of the present disclosure are described below with reference to Examples. However, the present disclosure is not limited to the following Examples.

• Examples 1

Electrical steel strips having the chemical compositions listed in Table 1 (the balance being Fe and inevitable impurity) were used as the material to be joined (the first electrical steel strip and the second electrical steel strip). The first electrical steel strip (preceding steel strip) and the second electrical steel strip (trailing steel strip) were then joined by double-sided friction stir welding under the conditions listed in Table 2, simulating being on a continuous cold rolling line, to produce the electrical steel strip welded joint. Here, the groove was a so-called I-type groove with no groove angle to the ends of the two electrical steel strips to be joined, and the two electrical steel strips were butted and joined with a surface state equivalent to that of milling. The same was true for Tables 3 and 4 below. Average values of ferrite grain size, average values of hardness, and Erichsen values of the base metal portion of the electrical steel strips are also listed in Table 1. Here, the average values of ferrite grain size and the average values of hardness of the base metal portion of the electrical steel strips were obtained by the methods described above. Further, the Erichsen values were measured in accordance with the Erichsen test method specified in JIS Z 2247. Conditions not specified were set in accordance with conventional methods.

In the double-sided friction stir welding, as illustrated in FIG. 1C, the front side rotating tool disposed on the vertically upper side was rotated clockwise when viewed from the vertically upper side, and the back side rotating tool disposed on the vertically lower side was rotated counterclockwise when viewed from the vertically upper side. That is, both were rotated counterclockwise when viewed from in front of the lead end of the rotating tool. Further, in each case, one of the two rotating tools with the cross section dimensions and shapes illustrated in FIG. 2A and FIG. 2B was used. Further, the front side rotating tool and the back side rotating tool had the same cross section dimensions and shape as each other. Each of the rotating tools was made of tungsten carbide (WC) with a Vickers hardness of HV 1090, which was harder than the material to be joined. Further, when the thicknesses of the first electrical steel strip and the second electrical steel strip were different, the butted portion of the first electrical steel strip and the second electrical steel strip was made with the back side (the side where the back side rotating tool was disposed) having no step and the front side (the side where the front side rotating tool was disposed) having a step.

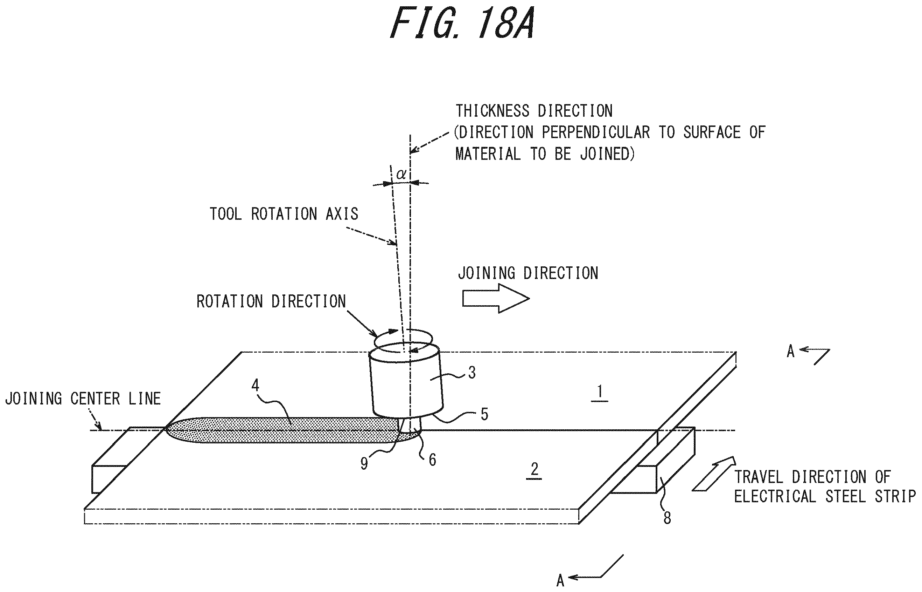

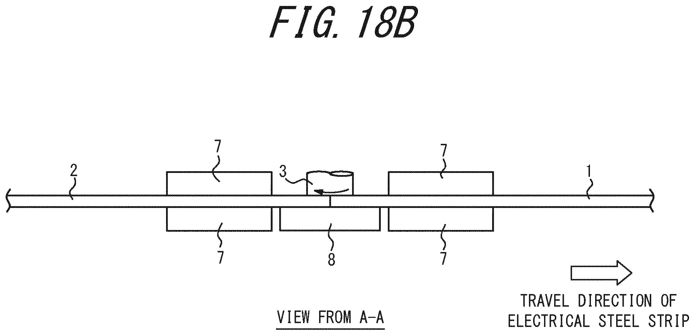

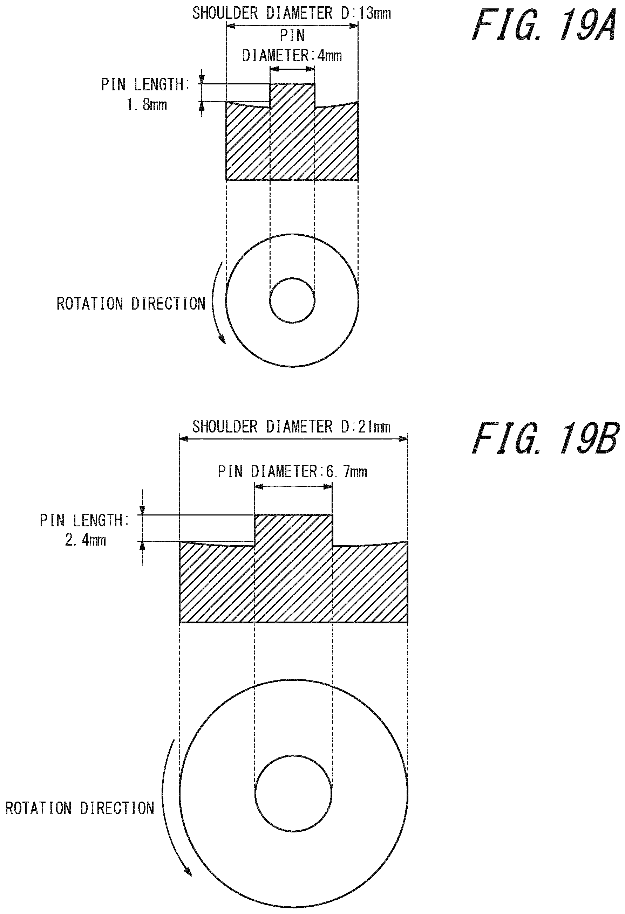

Further, for comparison, the material to be joined (the first electrical steel strip and the second electrical steel strip) listed in Table 3 was joined by so-called single-sided friction stir welding under the conditions listed in Table 3 to produce an electrical steel strip welded joint. FIG. 18A and FIG. 18B illustrate an example of a butt joint by a single-sided friction stir welding method. FIG. 18A is a side perspective view and FIG. 18B is a view from A-A in FIG. 18A. Further, FIG. 19A and FIG. 19B illustrate the shapes of the rotating tools used in the single-sided friction stir welding method.

Here, the rotating tool was rotated clockwise when viewed from the vertical upper side (counterclockwise when the lead end of the rotating tool is viewed from the front), as illustrated in FIG. 18A. Further, in each case, one of the two rotating tools with the cross section dimensions and shapes illustrated in FIG. 19A and FIG. 19B was used. Each of the rotating tools was made of tungsten carbide (WC) with a Vickers hardness of HV 1090, which was harder than the material to be joined. Further, when the thicknesses of the first electrical steel strip and the second electrical steel strip were different, the butted portion of the first electrical steel strip and the second electrical steel strip was made with the back side (side of surface plate) having no step and the front side (the side where the rotating tool was disposed) having a step.

Similarly, for comparison, the material to be joined (the first electrical steel strip and the second electrical steel strip) listed in Table 4 was joined by laser welding under the conditions listed in Table 4 to produce an electrical steel strip welded joint.

For the laser welding, a $CO_2$ laser oscillator with a maximum output of 5.5 kW was used. Helium was used as the shielding gas, and the shielding gas flow rate was 40 L/min. In Table 4, an entry of "no" under "filler wire addition" indicates welding without filler wire. Further, in Table 4, an entry of "yes" under "filler wire addition" indicates welding using a metal inert gas (MIG) welding wire (0.9 mm diameter) having a chemical composition listed in Table 5 (the balance being Fe and inevitable impurity) as filler wire.

For the electrical steel strip welded joints thus obtained, the joined portion, the thermo-mechanically affected zone, and the base metal portion were defined as described above.

Further, the following were measured as described above:

Dsz: average value (μm) of ferrite grain size of the joined portion,
Dhaz1: average value (μm) of ferrite grain size of the thermo-mechanically affected zone on the first electrical steel strip side,
Dhaz2: average value (μm) of ferrite grain size of the thermo-mechanically affected zone on the second electrical steel strip side,
Dbm1: average value (μm) of ferrite grain size of the base metal portion of the first electrical steel strip,
Dbm2: average value (μm) of ferrite grain size of the base metal portion of the second electrical steel strip,
Hsz: average value of hardness of the joined portion,
Hbm1: average value of hardness of the base metal portion of the first electrical steel strip, and
Hbm2: average value of hardness of the base metal portion of the second electrical steel strip.

Further, the electrical steel strip welded joints were each cut in the thickness (vertical) direction so that the plane illustrated in FIG. 17 (that is, the plane including the perpendicular-to-joining direction and the thickness direction) became a cross section, and TszL: minimum value (mm) of joined portion thickness and TszH: maximum value (mm) of joined portion thickness were measured at the cross section.

In the electrical steel strip welded joint obtained by laser welding, the welded portion was regarded as the joined portion and the heat-affected zone as the thermo-mechanically affected zone for the above measurements. The measurement procedures and the like were the same as that for an electrical steel strip welded joint obtained by friction stir welding.

The results are listed in Tables 6 to 8. The above measurements were omitted when defects were identified in the checking of surface defects and internal defects described below. Further, when surface defects were identified, checking of internal defects was also omitted.

The electrical steel strip welded joints were checked for (I) presence of surface defects and (II) presence of internal defects according to the following procedures. Results are listed in Table 9.

(I) Presence of surface defects

The front side and back side of the joined portion and the thermo-mechanically affected zone (in the case of laser welding, the welded portion and the heat-affected zone) of the electrical steel strip welded joints were visually checked for the presence of an unjoined state and cracking. The presence or absence of surface defects was then judged according to the following criteria.

Surface defect: no meant that an unjoined state and cracking were not identified.

Surface defect: yes meant that at least one of an unjoined state or cracking was identified.

(II) Presence of internal defects

The electrical steel strip welded joints were cut in the thickness (vertical) direction so that the plane illustrated in FIG. 17 (that is, the plane including the perpendicular-to-joining direction and the thickness direction) became the observation plane, and test pieces were collected. For each electrical steel strip welded joint, a total of three test pieces were collected. The cutting positions along the joining direction were 20 mm from an end of the material to be joined on a side where joining (welding) started, 20 mm from an end of the material to be joined on a side where joining (welding) ended, and in the middle of both ends of the material to be joined, such that the cross sections became observation planes. The observation plane of each obtained test piece was then observed under an optical microscope (magnification: 10×). The presence or absence of internal defects was then judged according to the following criteria.

Internal defect: no meant that an unjoined state and cracking were not identified in the joined portion of all three test pieces.

Internal defect: yes meant that at least one of an unjoined state or cracking was identified in the joined portion in at least one of the test pieces.

The electrical steel strip welded joints were evaluated for effectiveness in inhibiting the occurrence of coil joint fractures in a production line (hereinafter also referred to as fracture inhibition effect) in the following way.

Test pieces were collected from each of the electrical steel strip welded joints so that the joined portion, the thermo-mechanically affected zone and base metal on the first electrical steel strip side, and the thermo-mechanically affected zone and base metal on the second electrical steel strip side were included. Then, using the collected test pieces, the Erichsen values of the welded joints were measured in accordance with the Erichsen test method specified in JIS Z 2247. The ratio of the Erichsen value of the welded joint to the Erichsen value of the base metal portion (hereinafter also referred to as the Erichsen value ratio) was used to evaluate the fracture inhibition effect based on the following criteria. Results are listed in Table 9.

[Erichsen value ratio (%)] = [Erichsen value of welded joint] / [Erichsen value of base metal portion] $\times$ 100

O (Pass): Erichsen value ratio of 80 % or more
$\times$ (Fail): Erichsen value ratio of less than 80 %.

When the Erichsen value of the base metal portion of the first electrical steel strip and the Erichsen value of the base metal portion of the second electrical steel strip were different, the Erichsen value of the base metal portion was considered to be the smaller of the Erichsen value of the base metal portion of the first electrical steel strip and the Erichsen value of the base metal portion of the second electrical steel strip.

[Table 1]

Table 1

| Steel sample ID | Thickness (mm) | Chemical composition (mass%) | | | | | Average ferrite grain size in base metal portion ($\mu$m) | Average hardness of base metal portion | Erichsen value of base metal portion (mm) |
|---|---|---|---|---|---|---|---|---|---|
| | | C | Si | Mn | P | S | | | |
| B1-1 | 2.0 | 0.02 | 2.5 | 0.01 | 0.015 | 0.006 | 280 | 219 | 12.4 |
| B1-2 | 2.6 | 0.02 | 2.5 | 0.01 | 0.015 | 0.006 | 280 | 219 | 13.5 |
| B2-1 | 2.0 | 0.01 | 3.5 | 0.02 | 0.012 | 0.006 | 310 | 242 | 3.5 |
| B2-2 | 2.6 | 0.01 | 3.5 | 0.02 | 0.012 | 0.006 | 310 | 242 | 3.8 |

Table 2

| | Joint type | Joining method | Material to be joined | | | | t (mm) | TJ (mm) | Shape | Rotating tool | | | Joining conditions | | | | | | Expression (1) | Expression (2) | Expression (9) | Expression (10) |
|---|---|---|---|---|---|---|---|---|---|---|---|---|---|---|---|---|---|---|---|---|---|---|
| | | | First electrical steel strip | | Second electrical steel strip | | | | | Shoulder diameter D (mm) | Pin diameter (mm) | Pin length (mm) | Tilt angle α (°) | Shoulder gap G (mm) | Rotation speed RS (r/min) | | Joining speed JS (mm/min) | RS×D³/ JS | | | | |
| | | | Steel sample ID | Thickness t1 (mm) | Steel sample ID | Thickness t2 (mm) | | | | | | | | | Front side | Back side | | | | | | |
| Example 1 | Butt | Double-sided | B1-1 | 2.0 | B1-1 | 2.0 | 2.0 | 2.0 | FIG. 2A | 13 | 4 | 0.6 | 1.5 | 1.20 | 1000 | 1000 | 2000 | 1099 | O | O | O | O |
| Example 2 | Butt | Double-sided | B1-2 | 2.6 | B1-2 | 2.6 | 2.6 | 2.6 | FIG. 2B | 21 | 6.7 | 0.9 | 1.5 | 1.50 | 800 | 800 | 2000 | 3704 | O | O | O | O |
| Example 3 | Butt | Double-sided | B2-1 | 2.0 | B2-1 | 2.0 | 2.0 | 2.0 | FIG. 2A | 13 | 4 | 0.6 | 1.5 | 1.20 | 300 | 300 | 1000 | 659 | O | O | O | O |
| Example 4 | Butt | Double-sided | B2-2 | 2.6 | B2-2 | 2.6 | 2.6 | 2.6 | FIG. 2B | 21 | 6.7 | 0.9 | 1.5 | 1.50 | 550 | 550 | 1000 | 5094 | O | O | O | O |
| Example 5 | Butt | Double-sided | B1-1 | 2.0 | B2-1 | 2.0 | 2.0 | 2.0 | FIG. 2A | 13 | 4 | 0.6 | 1.5 | 1.20 | 1500 | 1500 | 3000 | 1099 | O | O | O | O |
| Example 6 | Butt | Double-sided | B1-2 | 2.6 | B2-2 | 2.6 | 2.6 | 2.6 | FIG. 2B | 21 | 6.7 | 0.9 | 1.5 | 1.50 | 1200 | 1200 | 3000 | 3704 | O | O | O | O |
| Example 7 | Butt | Double-sided | B1-1 | 2.0 | B1-1 | 2.0 | 2.0 | 2.0 | FIG. 2A | 13 | 4 | 0.6 | 1.5 | 1.70 | 1000 | 1000 | 2000 | 1099 | O | O | O | O |
| Example 8 | Butt | Double-sided | B2-2 | 2.6 | B2-2 | 2.6 | 2.6 | 2.6 | FIG. 2B | 21 | 6.7 | 0.9 | 1.5 | 1.30 | 800 | 800 | 2000 | 3704 | O | O | O | O |
| Example 9 | Butt | Double-sided | B2-1 | 2.0 | B1-1 | 2.0 | 2.0 | 2.0 | FIG. 2A | 13 | 4 | 0.6 | 0.5 | **0.95** | 1000 | 1000 | 2000 | 1099 | O | O | O | × |
| Example 10 | Butt | Double-sided | B2-2 | 2.6 | B1-2 | 2.6 | 2.6 | 2.6 | FIG. 2B | 21 | 6.7 | 0.9 | **2.5** | **1.15** | 800 | 800 | 2000 | 3704 | O | O | × | × |
| Comparative Example 1 | Butt | Double-sided | B2-1 | 2.0 | B2-1 | 2.0 | 2.0 | 2.0 | FIG. 2B | **21** | 6.7 | 0.9 | 2 | 1.20 | 500 | 500 | 1000 | **4631** | × | × | O | O |
| Comparative Example 2 | Butt | Double-sided | B2-2 | 2.6 | B2-2 | 2.6 | 2.6 | 2.6 | FIG. 2A | 13 | 4 | 0.6 | 2 | 1.50 | 200 | 200 | 1000 | **439** | O | × | O | O |
| Comparative Example 3 | Butt | Double-sided | B1-1 | 2.0 | B2-1 | 2.0 | 2.0 | 2.0 | FIG. 2A | 13 | 4 | 0.6 | **0** | **1.90** | 500 | 500 | 3000 | **366** | O | × | × | × |
| Comparative Example 4 | Butt | Double-sided | B1-2 | 2.6 | B2-2 | 2.6 | 2.6 | 2.6 | FIG. 2B | 21 | 6.7 | 0.9 | **3.5** | **1.10** | 800 | 800 | 1000 | **7409** | O | × | × | × |

O Satisfies the relationship in the Expression
× Does not satisfy the relationship in the Expression

[Table 2]

[Table 3]

Table 3

| | Joint type | Joining method | Material to be joined | | | | t (mm) | TJ (mm) | Rotating tool | | | | Joining conditions | | | | |
| | | | First electrical steel strip | | Second electrical steel strip | | | | | | | | | | | | |
| | | | Steel sample ID | Thickness t1 (mm) | Steel sample ID | Thickness t2 (mm) | | | Shape | Shoulder diameter D (mm) | Pin diameter (mm) | Pin length (mm) | Tilt angle $\alpha$ (°) | Depth pushed (mm) | Rotation speed RS (r/min) | Joining speed JS (mm/min) | RS×D³/ JS |
| Comparative Example 5 | Butt | **Single-sided** | B2-1 | 2.0 | B2-1 | 2.0 | 2.0 | 2.0 | FIG. 19A | 13 | 4 | 1.8 | 3 | 1.90 | 1000 | 1000 | 2197 |
| Comparative Example 6 | Butt | **Single-sided** | B2-2 | 2.6 | B2-2 | 2.6 | 2.6 | 2.6 | FIG. 19B | 21 | 6.7 | 2.4 | 3 | 2.50 | 2000 | 1000 | 18522 |

[Table 4]

[Table 4]

Table 4

| | Joint type | Joining method | Material to be joined | | | | t (mm) | TJ (mm) | Joining conditions | | | | Filler wire addition | |
| | | | First electrical steel strip | | Second electrical steel strip | | | | Gap between electrical steel strips (mm) | Laser output (kW) | Laser beam diameter (mm) | Welding speed (mm/min) | | |
| | | | Steel sample ID | Thickness t1 (mm) | Steel sample ID | Thickness t2 (mm) | | | | | | | Yes or no | Wire feed speed (m/min) |
|---|---|---|---|---|---|---|---|---|---|---|---|---|---|---|
| Comparative Example 7 | Butt | **Laser** | B1-1 | 2.0 | B1-1 | 2.0 | 2.0 | 2.0 | 0 | 2.5 | 0.5 | 1500 | No | - |
| Comparative Example 8 | Butt | **Laser** | B1-2 | 2.6 | B1-2 | 2.6 | 2.6 | 2.6 | 0 | 3.0 | 0.5 | 1250 | No | - |
| Comparative Example 9 | Butt | **Laser** | B2-1 | 2.0 | B2-1 | 2.0 | 2.0 | 2.0 | 0 | 2.5 | 0.5 | 1500 | No | - |
| Comparative Example 10 | Butt | **Laser** | B2-2 | 2.6 | B2-2 | 2.6 | 2.6 | 2.6 | 0 | 3.0 | 0.5 | 1250 | No | - |
| Comparative Example 11 | Butt | **Laser** | B1-1 | 2.0 | B1-1 | 2.0 | 2.0 | 2.0 | 0.3 | 5.0 | 0.5 | 1300 | Yes | 3.0 |
| Comparative Example 12 | Butt | **Laser** | B1-2 | 2.6 | B1-2 | 2.6 | 2.6 | 2.6 | 0.3 | 5.0 | 0.5 | 1000 | Yes | 3.0 |
| Comparative Example 13 | Butt | **Laser** | B2-1 | 2.0 | B2-1 | 2.0 | 2.0 | 2.0 | 0.3 | 5.0 | 0.5 | 1300 | Yes | 3.0 |
| Comparative Example 14 | Butt | **Laser** | B2-2 | 2.6 | B2-2 | 2.6 | 2.6 | 2.6 | 0.3 | 5.0 | 0.5 | 1000 | Yes | 3.0 |
| Comparative Example 15 | Butt | **Laser** | B1-1 | 2.0 | B2-1 | 2.0 | 2.0 | 2.0 | 0.3 | 5.0 | 0.5 | 1300 | Yes | 3.0 |
| Comparative Example 16 | Butt | **Laser** | B1-2 | 2.6 | B2-2 | 2.6 | 2.6 | 2.6 | 0.3 | 5.0 | 0.5 | 1000 | Yes | 3.0 |

EP 4 378 617 B1

[Table 5]

Table 5

| Ref sign | Chemical composition (mass%) | | | | | | | | | |
|---|---|---|---|---|---|---|---|---|---|---|
| | C | Si | Mn | Al | Ti | Ni | Cr | Mo | Nb+Ta | Balance |
| F1 | 0.02 | 0.29 | 0.07 | 0.15 | 0.17 | 61.3 | 22.2 | 9.2 | 3.51 | Fe and impurity |

Table 6

| | Joint type | Joining method | Material to be joined | | | | | | | | | | Joined portion | | | | | Thermo-mechanically affected zone | | | |
| --- | --- | --- | --- | --- | --- | --- | --- | --- | --- | --- | --- | --- | --- | --- | --- | --- | --- | --- | --- | --- | --- |
| | | | First electrical steel strip | | | | Second electrical steel strip | | | | TbmL (mm) | TbmH (mm) | Ferrite phase area ratio (%) | Dsz (μm) | Hsz | TszL (mm) | TszH (mm) | First electrical steel strip side | | Second electrical steel strip side | |
| | | | Steel sample ID | Dbm1 (μm) | Hbm1 | Thickness (mm) | Steel sample ID | Dbm2 (μm) | Hbm2 | Thickness (mm) | | | | | | | | Ferrite phase area ratio (%) | Dhaz1 (μm) | Ferrite phase area ratio (%) | Dhaz2 (μm) |
| Example 1 | Butt | Double-sided | B1-1 | 280 | 219 | 2.0 | B1-1 | 280 | 219 | 2.0 | 2.0 | 2.0 | 100 | 77 | 234 | 1.9 | 2.0 | 100 | 190 | 100 | 205 |
| Example 2 | Butt | Double-sided | B1-2 | 280 | 219 | 2.6 | B1-2 | 280 | 219 | 2.6 | 2.6 | 2.6 | 100 | 99 | 230 | 2.5 | 2.7 | 100 | 217 | 100 | 210 |
| Example 3 | Butt | Double-sided | B2-1 | 310 | 242 | 2.0 | B2-1 | 310 | 242 | 2.0 | 2.0 | 2.0 | 100 | 50 | 272 | 1.8 | 2.0 | 100 | 192 | 100 | 197 |
| Example 4 | Butt | Double-sided | B2-2 | 310 | 242 | 2.6 | B2-2 | 310 | 242 | 2.6 | 2.6 | 2.6 | 100 | 181 | 248 | 2.3 | 2.8 | 100 | 253 | 100 | 257 |
| Example 5 | Butt | Double-sided | B1-1 | 280 | 219 | 2.0 | B2-1 | 310 | 242 | 2.0 | 2.0 | 2.0 | 100 | 79 | 248 | 1.8 | 2.2 | 100 | 203 | 100 | 223 |
| Example 6 | Butt | Double-sided | B1-2 | 280 | 219 | 2.6 | B2-2 | 310 | 242 | 2.6 | 2.6 | 2.6 | 100 | 98 | 244 | 2.5 | 2.8 | 100 | 218 | 100 | 235 |
| Example 7 | Butt | Double-sided | B1-1 | 280 | 219 | 2.0 | B1-1 | 280 | 219 | 2.0 | 2.0 | 2.0 | 100 | 103 | 229 | 2.0 | 2.0 | 100 | 198 | 100 | 196 |
| Example 8 | Butt | Double-sided | B2-2 | 310 | 242 | 2.6 | B2-2 | 310 | 242 | 2.6 | 2.6 | 2.6 | 100 | 105 | 256 | 2.3 | 2.6 | 100 | 221 | 100 | 223 |
| Example 9 | Butt | Double-sided | B2-1 | 310 | 242 | 2.0 | B1-1 | 280 | 219 | 2.0 | 2.0 | 2.0 | 100 | 80 | 247 | **1.5** | 1.9 | 100 | 225 | 100 | 205 |
| Example 10 | Butt | Double-sided | B2-2 | 310 | 242 | 2.6 | B1-2 | 280 | 219 | 2.6 | 2.6 | 2.6 | 100 | 108 | 242 | **1.9** | 2.6 | 100 | 237 | 100 | 220 |
| Comparative Example 1 | Butt | Double-sided | B2-1 | 310 | 242 | 2.0 | B2-1 | 310 | 242 | 2.0 | 2.0 | 2.0 | - | - | - | - | - | - | - | - | - |
| Comparative Example 2 | Butt | Double-sided | B2-2 | 310 | 242 | 2.6 | B2-2 | 310 | 242 | 2.6 | 2.6 | 2.6 | - | - | - | - | - | - | - | - | - |
| Comparative Example 3 | Butt | Double-sided | B1-1 | 280 | 219 | 2.0 | B2-1 | 310 | 242 | 2.0 | 2.0 | 2.0 | - | - | - | - | - | - | - | - | - |
| Comparative Example 4 | Butt | Double-sided | B1-2 | 280 | 219 | 2.6 | B2-2 | 310 | 242 | 2.6 | 2.6 | 2.6 | 100 | **250** | **201** | **1.9** | 2.6 | 100 | 250 | 100 | 290 |

[Table 6]

EP 4 378 617 B1

29

Table 7

| | Joint type | Joining method | Material to be joined | | | | | | | | | | | Joined portion | | | | | Thermo-mechanically affected zone | | | |
| | | | First electrical steel strip | | | | Second electrical steel strip | | | | TbmL (mm) | TbmH (mm) | Ferrite phase area ratio (%) | Dsz (μm) | Hsz | TszL (mm) | TszH (mm) | First electrical steel strip side | | Second electrical steel strip side | |
| | | | Steel sample ID | Dbm1 (μm) | Hbm1 | Thickness (mm) | Steel sample ID | Dbm2 (μm) | Hbm2 | Thickness (mm) | | | | | | | | Ferrite phase area ratio (%) | Dhaz1 (μm) | Ferrite phase area ratio (%) | Dhaz2 (μm) |
|---|---|---|---|---|---|---|---|---|---|---|---|---|---|---|---|---|---|---|---|---|---|
| Comparative Example 5 | Butt | Single-sided | B2-1 | 310 | 242 | 2.0 | B2-1 | 310 | 242 | 2.0 | 2.0 | 2.0 | - | - | - | - | - | - | - | - | - |
| Comparative Example 6 | Butt | Single-sided | B2-2 | 310 | 242 | 2.6 | B2-2 | 310 | 242 | 2.6 | 2.6 | 2.6 | - | - | - | - | - | - | - | - | - |

[Table 8]

Table 8

| | Joint type | Joining method | Material to be joined | | | | | | | | Joined portion | | | | | | | Thermo-mechanically affected zone | | | |
|---|---|---|---|---|---|---|---|---|---|---|---|---|---|---|---|---|---|---|---|---|---|
| | | | First electrical steel strip | | | | Second electrical steel strip | | | | | | | | | | | First electrical steel strip side | | Second electrical steel strip side | |
| | | | Steel sample ID | Dbm1 (µm) | Hbm1 | Thickness (mm) | Steel sample ID | Dbm2 (µm) | Hbm2 | Thickness (mm) | TbmL (mm) | TbmH (mm) | Ferrite phase area ratio (%) | Dsz (µm) | Hsz | TszL (mm) | TszH (mm) | Ferrite phase area ratio (%) | Dhaz1 (µm) | Ferrite phase area ratio (%) | Dhaz2 (µm) |
| Comparative Example 7 | Butt | Laser | B1-1 | 280 | 219 | 2.0 | B1-1 | 280 | 219 | 2.0 | 2.0 | 2.0 | 100 | 410 | 218 | 1.9 | 2.2 | 100 | 310 | 100 | 327 |
| Comparative Example 8 | Butt | Laser | B1-2 | 280 | 219 | 2.6 | B1-2 | 280 | 219 | 2.6 | 2.6 | 2.6 | 100 | 453 | 215 | 2.6 | 2.7 | 100 | 326 | 100 | 321 |
| Comparative Example 9 | Butt | Laser | B2-1 | 310 | 242 | 2.0 | B2-1 | 310 | 242 | 2.0 | 2.0 | 2.0 | 100 | 437 | 240 | 2.0 | 2.1 | 100 | 351 | 100 | 346 |
| Comparative Example 10 | Butt | Laser | B2-2 | 310 | 242 | 2.6 | B2-2 | 310 | 242 | 2.6 | 2.6 | 2.6 | 100 | 440 | 238 | 2.5 | 2.8 | 100 | 367 | 100 | 372 |
| Comparative Example 11 | Butt | Laser | B1-1 | 280 | 219 | 2.0 | B1-1 | 280 | 219 | 2.0 | 2.0 | 2.0 | 43 | 23 | 271 | 2.0 | 2.7 | 100 | 338 | 100 | 362 |
| Comparative Example 12 | Butt | Laser | B1-2 | 280 | 219 | 2.6 | B1-2 | 280 | 219 | 2.6 | 2.6 | 2.6 | 40 | 31 | 265 | 2.6 | 3.5 | 100 | 359 | 100 | 355 |
| Comparative Example 13 | Butt | Laser | B2-1 | 310 | 242 | 2.0 | B2-1 | 310 | 242 | 2.0 | 2.0 | 2.0 | 49 | 19 | 283 | 2.0 | 2.5 | 100 | 388 | 100 | 395 |
| Comparative Example 14 | Butt | Laser | B2-2 | 310 | 242 | 2.6 | B2-2 | 310 | 242 | 2.6 | 2.6 | 2.6 | 46 | 28 | 278 | 2.6 | 3.5 | 100 | 399 | 100 | 413 |
| Comparative Example 15 | Butt | Laser | B1-1 | 280 | 219 | 2.0 | B2-1 | 310 | 242 | 2.0 | 2.0 | 2.0 | 45 | 25 | 276 | 2.0 | 2.5 | 100 | 352 | 100 | 392 |
| Comparative Example 16 | Butt | Laser | B1-2 | 280 | 219 | 2.6 | B2-2 | 310 | 242 | 2.6 | 2.6 | 2.6 | 48 | 21 | 281 | 2.6 | 3.3 | 100 | 377 | 100 | 401 |

31

[Table 9]

Table 9

| | Expression (3) | Expression (4) | Expression (5) | Expression (6) | Expression (7) | Expression (8) | Surface defect | Internal defect | Erichsen value of welded joint (mm) | Erichsen value ratio (%) |
|---|---|---|---|---|---|---|---|---|---|---|
| Example 1 | O | O | O | O | O | O | No | No | 12.6 | 102 |
| Example 2 | O | O | O | O | O | O | No | No | 13.4 | 99 |
| Example 3 | O | O | O | O | O | O | No | No | 3.3 | 94 |
| Example 4 | O | O | O | O | O | O | No | No | 3.2 | 84 |
| Example 5 | O | O | O | O | O | O | No | No | 3.1 | 89 |
| Example 6 | O | O | O | O | O | O | No | No | 3.2 | 84 |
| Example 7 | O | O | O | O | O | O | No | No | 11.1 | 90 |
| Example 8 | O | O | O | O | O | O | No | No | 3.2 | 84 |
| Example 9 | O | O | O | O | × | O | No | No | 2.8 | 80 |
| Example 10 | O | O | O | O | × | O | No | No | 3.1 | 82 |
| Comparative Example 1 | - | - | - | - | - | - | Yes | - | - | - |
| Comparative Example 2 | - | - | - | - | - | - | No | Yes | - | - |
| Comparative Example 3 | - | - | - | - | - | - | Yes | Yes | - | - |
| Comparative Example 4 | × | O | O | × | × | O | No | No | 2.5 | 66 |
| Comparative Example 5 | - | - | - | - | - | - | Yes | - | - | - |
| Comparative Example 6 | - | - | - | - | - | - | Yes | - | - | - |
| Comparative Example 7 | × | × | × | O | O | O | No | No | 9.5 | 77 |
| Comparative Example 8 | × | × | × | O | O | O | No | No | 10.0 | 74 |
| Comparative Example 9 | × | × | × | O | O | O | No | No | 1.1 | 31 |
| Comparative Example 10 | × | × | × | O | O | O | No | No | 2.3 | 61 |
| Comparative Example 11 | O | × | × | × | O | × | No | No | 9.8 | 79 |
| Comparative Example 12 | O | × | × | × | O | × | No | No | 9.7 | 72 |
| Comparative Example 13 | O | × | × | O | O | O | No | No | 2.5 | 71 |
| Comparative Example 14 | O | × | × | O | O | × | No | No | 2.2 | 58 |
| Comparative Example 15 | O | × | × | O | O | O | No | No | 2.3 | 66 |
| Comparative Example 16 | O | × | × | × | O | O | No | No | 2.6 | 68 |

O Satisfies the relationship in the Expression

× Does not satisfy the relationship in the Expression

Table 9 indicates that for all of the Examples, electrical steel strip welded joints were obtained that were free from defects and had excellent fracture inhibition effects, while achieving highly efficient joining with a joining speed of 1000 mm/min or more.

On the other hand, for each of the Comparative Examples, either defects occurred or a sufficient fracture inhibition effect was not achieved.

• Examples 2

Electrical steel strips having the chemical compositions listed in Table 1 (the balance being Fe and inevitable impurity) were used as the material to be joined (the first electrical steel strip and the second electrical steel strip). The first electrical steel strip (preceding steel strip) and the second electrical steel strip (trailing steel strip) were then joined by double-sided friction stir welding under the conditions listed in Tables 10 and 11, simulating being on a continuous cold rolling line, to produce the electrical steel strip welded joint. Here, the groove was a so-called I-type groove with no groove angle to the ends of the two electrical steel strips to be joined, and the two electrical steel strips were butted and joined with a surface state equivalent to that of milling. Conditions not specified were set in accordance with conventional methods.

In the double-sided friction stir welding, as illustrated in FIG. 1A, the front side rotating tool disposed on the vertically upper side was rotated clockwise when viewed from the vertically upper side, and the back side rotating tool disposed on the vertically lower side was rotated counterclockwise when viewed from the vertically upper side. That is, both were rotated counterclockwise when viewed from in front of the lead end of the rotating tool. Further, in each case, one of the rotating tools with the shapes illustrated in FIG. 2A to FIG. 8 was used. Further, the front side rotating tool and the back side rotating tool had the same cross section dimensions and shape as each other. Each of the rotating tools was made of tungsten carbide (WC) with a Vickers hardness of HV 1090, which was harder than the material to be joined. Further, when the thicknesses of the first electrical steel strip and the second electrical steel strip were different, the butted portion of the first electrical steel strip and the second electrical steel strip was made with the back side (the side where the back side rotating tool was disposed) having no step and the front side (the side where the front side rotating tool was disposed) having a step.

For the electrical steel strip welded joints thus obtained, the joined portion, the thermo-mechanically affected zone, and the base metal portion were defined as described above.

Further, the following were measured as described above:

Dsz: average value ($\mu$m) of ferrite grain size of the joined portion,
Dhaz1: average value ($\mu$m) of ferrite grain size of the thermo-mechanically affected zone on the first electrical steel strip side,
Dhaz2: average value ($\mu$m) of ferrite grain size of the thermo-mechanically affected zone on the second electrical steel strip side,
Dbm1: average value ($\mu$m) of ferrite grain size of the base metal portion of the first electrical steel strip,
Dbm2: average value ($\mu$m) of ferrite grain size of the base metal portion of the second electrical steel strip,
Hsz: average value of hardness of the joined portion,
Hbm1: average value of hardness of the base metal portion of the first electrical steel strip, and
Hbm2: average value of hardness of the base metal portion of the second electrical steel strip.

Further, the electrical steel strip welded joints were each cut in the thickness (vertical) direction so that the plane illustrated in FIG. 17 (that is, the plane including the perpendicular-to-joining direction and the thickness direction) became a cross section, and TszL: minimum value (mm) of joined portion thickness and TszH: maximum value (mm) of joined portion thickness were measured at the cross section.

The results are listed in Tables 12 and 13. The above measurements were omitted when defects were identified in the checking of surface defects and internal defects described below. Further, when surface defects were identified, checking of internal defects was also omitted.

The electrical steel strip welded joints were checked for (I) presence of surface defects and (II) presence of internal defects according to same procedures as in Examples 1. The results are listed in Tables 14 and 15.

The electrical steel strip welded joints were evaluated for effectiveness in inhibiting the occurrence of coil joint fractures in a production line (hereinafter also referred to as fracture inhibition effect) according to the same procedures as in Examples 1. The results are listed in Tables 14 and 15.

Further, durability of the rotating tools was evaluated according to the following procedure.

When the rotating tools are damaged or worn, joining failures due to internal defects occur at a high rate. Therefore, joining was repeated with a joint length of 0.5 m under the same conditions as above, and the resulting welded joints were judged for the presence or absence of internal defects by the judgment method described under "(II) Presence of internal defects" above.

The durability of the rotating tools was evaluated based on the maximum number of joints at which 90 % or more of the total number of joints were judged to be free of internal defects (hereinafter also referred to as 90 % maintained maximum joint number). The results are listed in Tables 14 and 15. When the 90 % maintained maximum joint number was 15 or more, the durability (life span) of the rotating tool was judged to be excellent.

Here, when checking for presence of internal defects in the welded joints in the order of joining, and N is the number of the welded joints checked for presence of internal defects, the 90 % maintained maximum joint number is the maximum value of N that satisfies the following Expression (a).

[number of welded joints judged to be free of internal defects among welded joints checked for internal defects] ÷ [number of welded joints checked for internal defects] × 100 ≥ 90 ...(a)　　(a)

For example, when the welded joints obtained from the 1st to 4th joins are judged to have no internal defects, but the welded joint obtained from the 5th join is judged to have an internal defect:

when N = 4,

$$[\text{number of welded joints judged to be free of internal defects among welded joints checked for internal defects}] \div [\text{number of welded joints checked for internal defects N}] \times 100$$
$$= 4 \div 4 \times 100 = 100 \geq 90$$

and when N = 5,

$$[\text{number of welded joints judged to be free of internal defects among welded joints checked for internal defects}] \div [\text{number of welded joints checked for internal defects N}] \times 100$$
$$= 4 \div 5 \times 100 = 80 < 90$$

In other words, in this case, Expression (a) is satisfied up to N = 4, and Expression (a) is not satisfied from N = 5, so the 90 % maintained maximum joint number is 4.

Further, when the welded joints obtained from the 1st to 10th and 12th to 19th joins are judged to have no internal defects, but the welded joints obtained from the 11th, 20th, and 21st joins are judged to have an internal defect:

when N = 11,

$$[\text{number of welded joints judged to be free of internal defects among welded joints checked for internal defects}] \div [\text{number of welded joints checked for internal defects N}] \times 100$$
$$= 10 \div 11 \times 100 \approx 90.9 \geq 90$$

when N = 20,

$$[\text{number of welded joints judged to be free of internal defects among welded joints checked for internal defects}] \div [\text{number of welded joints checked for internal defects N}] \times 100$$
$$= 18 \div 20 \times 100 = 90 \geq 90$$

when N = 21,

$$[\text{number of welded joints judged to be free of internal defects among}$$
$$\text{welded joints checked for internal defects}] \div [\text{number of welded joints checked}$$
$$\text{for internal defects N}] \times 100$$
$$= 18 \div 21 \times 100 = 85.7 < 90$$

In other words, in this case, Expression (a) is satisfied up to N = 20, and Expression (a) is not satisfied from N = 21, so the 90 % maintained maximum joint number is 20.

The 90 % maintained maximum joint number was 0 for welded joints judged to have defects in (I) Presence of surface defects or (II) Presence of internal defects as described above.

Table 10

| | Joint type | Material to be joined | | | | t (mm) | TJ (mm) | Shape | | Rotating tool | | | | Joining conditions | | | | | | RS×D³/ JS | Expression (1) | Expression (2) | Expression (10) |
|---|---|---|---|---|---|---|---|---|---|---|---|---|---|---|---|---|---|---|---|---|---|---|---|
| | | First electrical steel strip | | Second electrical steel strip | | | | | | Shoulder diameter D (mm) | dv or dc (mm) | dv/D or dc/D (mm) | Stepped portion form | Tilt angle α (°) | Shoulder gap G (mm) | Rotation speed RS (r/min) | | Joining speed JS (mm/min) | | | | | |
| | | Steel sample ID | Thickness t1 (mm) | Steel sample ID | Thickness t2 (mm) | | | | | | | | | | | Front side | Back side | | | | | | |
| Example 1 | Butt | B1-1 | 2.0 | B1-1 | 2.0 | 2.0 | 2.0 | FIG. 8 | Concave-end | 9 | 0.2 | 0.022 | Step-like | 0 | 1.20 | 2000 | 2000 | 2000 | 729 | O | O | O |
| Example 2 | Butt | B1-1 | 2.0 | B1-1 | 2.0 | 2.0 | 2.0 | FIG. 8 | Concave-end | 13 | 0.3 | 0.023 | Grooved | 0 | 1.40 | 1000 | 1000 | 2000 | 1099 | O | O | O |
| Example 3 | Butt | B1-2 | 2.6 | B1-2 | 2.6 | 2.6 | 2.6 | FIG. 8 | Concave-end | 21 | 0.3 | 0.014 | Grooved | 0 | 1.80 | 800 | 800 | 2000 | 3704 | O | O | O |
| Example 4 | Butt | B2-1 | 2.0 | B2-1 | 2.0 | 2.0 | 2.0 | FIG. 5 | Concave-end | 9 | 0.2 | 0.022 | - | 0 | 1.10 | 800 | 800 | 1000 | 583 | O | O | O |
| Example 5 | Butt | B2-2 | 2.6 | B2-2 | 2.6 | 2.6 | 2.6 | FIG. 5 | Concave-end | 13 | 0.3 | 0.023 | - | 0 | 1.80 | 800 | 800 | 1000 | 1758 | O | O | O |
| Example 6 | Butt | B2-2 | 2.6 | B2-2 | 2.6 | 2.6 | 2.6 | FIG. 5 | Concave-end | 21 | 0.3 | 0.014 | - | 0 | 2.20 | 1500 | 1500 | 3000 | 4631 | O | O | O |
| Example 7 | Butt | B1-1 | 2.0 | B2-1 | 2.0 | 2.0 | 2.0 | FIG. 6 | Flat-end | 9 | - | - | Step-like | 0 | 1.20 | 3000 | 3000 | 3000 | 729 | O | O | O |
| Example 8 | Butt | B2-1 | 2.0 | B1-1 | 2.0 | 2.0 | 2.0 | FIG. 6 | Flat-end | 13 | - | - | Grooved | 0 | 1.40 | 1500 | 1500 | 3000 | 1099 | O | O | O |
| Example 9 | Butt | B1-2 | 2.6 | B2-2 | 2.6 | 2.6 | 2.6 | FIG. 6 | Flat-end | 21 | - | - | Grooved | 0 | 1.80 | 1200 | 1200 | 3000 | 3704 | O | O | O |
| Example 10 | Butt | B2-1 | 2.0 | B2-1 | 2.0 | 2.0 | 2.0 | FIG. 3 | Flat-end | 9 | - | - | - | 0 | 1.20 | 2000 | 2000 | 2000 | 729 | O | O | O |
| Example 11 | Butt | B2-1 | 2.0 | B2-1 | 2.0 | 2.0 | 2.0 | FIG. 3 | Flat-end | 13 | - | - | - | 0 | 1.40 | 1000 | 1000 | 2000 | 1099 | O | O | O |
| Example 12 | Butt | B2-2 | 2.6 | B2-2 | 2.6 | 2.6 | 2.6 | FIG. 3 | Flat-end | 21 | - | - | - | 0 | 1.80 | 800 | 800 | 2000 | 3704 | O | O | O |
| Example 13 | Butt | B1-1 | 2.0 | B1-1 | 2.0 | 2.0 | 2.0 | FIG. 7 | Convex-end | 9 | 0.4 | 0.044 | Grooved | 0 | 1.10 | 800 | 800 | 1000 | 583 | O | O | O |
| Example 14 | Butt | B1-2 | 2.6 | B1-2 | 2.6 | 2.6 | 2.6 | FIG. 7 | Convex-end | 13 | 0.5 | 0.038 | Step-like | 0 | 1.80 | 800 | 800 | 1000 | 1758 | O | O | O |
| Example 15 | Butt | B1-2 | 2.6 | B1-2 | 2.6 | 2.6 | 2.6 | FIG. 7 | Convex-end | 21 | 0.5 | 0.024 | Step-like | 0 | 2.20 | 1500 | 1500 | 3000 | 4631 | O | O | O |
| Example 16 | Butt | B2-1 | 2.0 | B1-1 | 2.0 | 2.0 | 2.0 | FIG. 4 | Convex-end | 13 | 0.5 | 0.038 | - | 0 | 1.20 | 3000 | 3000 | 3000 | 2197 | O | O | O |
| Example 17 | Butt | B1-1 | 2.0 | B2-1 | 2.0 | 2.0 | 2.0 | FIG. 4 | Convex-end | 13 | 0.3 | 0.023 | - | 0 | 1.40 | 1500 | 1500 | 3000 | 1099 | O | O | O |
| Example 18 | Butt | B2-2 | 2.6 | B1-2 | 2.6 | 2.6 | 2.6 | FIG. 4 | Convex-end | 21 | 0.5 | 0.024 | - | 0 | 1.80 | 1200 | 1200 | 3000 | 3704 | O | O | O |

O Satisfies the relationship in the Expression

× Does not satisfy the relationship in the Expression

[Table 10]

EP 4 378 617 B1

Table 10 (cont'd)

| | Joint type | Material to be joined | | | | t (mm) | TJ (mm) | Shape | | Rotating tool | | | | Joining conditions | | | | | | | Expression (1) | Expression (2) | Expression (10) |
|---|---|---|---|---|---|---|---|---|---|---|---|---|---|---|---|---|---|---|---|---|---|---|---|
| | | First electrical steel strip | | Second electrical steel strip | | | | | | Shoulder diameter D (mm) | dv or dc (mm) | dv/D or dc/D | Stepped portion form | Tilt angle α (°) | Shoulder gap G (mm) | Rotation speed RS (r/min) | | Joining speed JS (mm/min) | RS×D³/JS | | | | |
| | | Steel sample ID | Thickness t1 (mm) | Steel sample ID | Thickness t2 (mm) | | | | | | | | | | | Front side | Back side | | | | | | |
| Example 19 | Butt | B1-1 | 2.0 | B1-1 | 2.0 | 2.0 | 2.0 | FIG. 7 | Convex-end | 9 | 0.4 | 0.044 | Grooved | 2 | 0.75 | 800 | 800 | 1000 | 583 | O | O | × |
| Example 20 | Butt | B1-2 | 2.6 | B1-2 | 2.6 | 2.6 | 2.6 | FIG. 7 | Convex-end | 13 | 0.5 | 0.038 | Step-like | 0 | 2.40 | 1500 | 1500 | 1000 | 3296 | O | O | × |
| Example 21 | Lap | B1-1 | 2.0 | B1-1 | 2.0 | 2.0 | 4.0 | FIG. 7 | Convex-end | 21 | 0.5 | 0.024 | Step-like | 0 | 3.00 | 600 | 600 | 1000 | 5557 | O | O | O |
| Comparative Example 1 | Butt | B1-1 | 2.0 | B1-1 | 2.0 | 2.0 | 2.0 | FIG. 3 | Flat-end | 21 | - | - | - | 0 | 1.20 | 1000 | 1000 | 2000 | 4631 | × | × | O |
| Comparative Example 2 | Butt | B1-2 | 2.6 | B1-2 | 2.6 | 2.6 | 2.6 | FIG. 7 | Convex-end | 9 | 0.4 | 0.044 | Grooved | 0 | 1.80 | 1000 | 1000 | 2000 | 365 | × | × | O |
| Comparative Example 3 | Butt | B1-2 | 2.6 | B2-2 | 2.6 | 2.6 | 2.6 | FIG. 8 | Concave-end | 21 | 0.3 | 0.014 | Grooved | 0 | 2.50 | 2000 | 2000 | 2000 | 9261 | O | × | × |
| Comparative Example 4 | Butt | B1-1 | 2.0 | B2-1 | 2.0 | 2.0 | 2.0 | FIG. 5 | Concave-end | 13 | 0.3 | 0.023 | - | 0 | 0.75 | 2500 | 2500 | 1000 | 5493 | O | × | × |

O Satisfies the relationship in the Expression

× Does not satisfy the relationship in the Expression

[Table 11]

Table 11

| | Joint type | Material to be joined | | | | | | | Rotating tool | | | | Tilt angle α (°) | Shoulder gap G (mm) | Joining conditions | | | RS×D³/JS | Expression (1) | Expression (2) | Expression (10) |
|---|---|---|---|---|---|---|---|---|---|---|---|---|---|---|---|---|---|---|---|---|---|
| | | First electrical steel strip | | Second electrical steel strip | | t (mm) | TJ (mm) | | Shape | Shoulder diameter D (mm) | Pin diameter (mm) | Pin length (mm) | | | Rotation speed RS (r/min) | | Joining speed JS (mm/min) | | | | |
| | | Steel sample ID | Thickness t1 (mm) | Steel sample ID | Thickness t2 (mm) | | | | | | | | | | Front side | Back side | | | | | |
| Example 22 | Butt | B1-1 | 2.0 | B1-1 | 2.0 | 2.0 | 2.0 | | FIG. 2A | 13 | 4 | 0.6 | 1.5 | 1.20 | 1000 | 1000 | 2000 | 1099 | O | O | O |
| Example 23 | Butt | B1-2 | 2.6 | B1-2 | 2.6 | 2.6 | 2.6 | | FIG. 2B | 21 | 6.7 | 0.9 | 1.5 | 1.50 | 800 | 800 | 2000 | 3704 | O | O | O |
| Example 24 | Butt | B2-1 | 2.0 | B2-1 | 2.0 | 2.0 | 2.0 | | FIG. 2A | 13 | 4 | 0.6 | 1.5 | 1.20 | 300 | 300 | 1000 | 659 | O | O | O |
| Example 25 | Butt | B2-2 | 2.6 | B2-2 | 2.6 | 2.6 | 2.6 | | FIG. 2B | 21 | 6.7 | 0.9 | 1.5 | 1.50 | 550 | 550 | 1000 | 5094 | O | O | O |
| Example 26 | Butt | B1-1 | 2.0 | B2-1 | 2.0 | 2.0 | 2.0 | | FIG. 2A | 13 | 4 | 0.6 | 1.5 | 1.20 | 1500 | 1500 | 3000 | 1099 | O | O | O |
| Example 27 | Butt | B1-2 | 2.6 | B2-2 | 2.6 | 2.6 | 2.6 | | FIG. 2B | 21 | 6.7 | 0.9 | 1.5 | 1.50 | 1200 | 1200 | 3000 | 3704 | O | O | O |
| Example 28 | Butt | B1-1 | 2.0 | B1-1 | 2.0 | 2.0 | 2.0 | | FIG. 2A | 13 | 4 | 0.6 | 1.5 | 1.70 | 1000 | 1000 | 2000 | 1099 | O | O | O |
| Example 29 | Butt | B2-2 | 2.6 | B2-2 | 2.6 | 2.6 | 2.6 | | FIG. 2A | 13 | 4 | 0.6 | 1.5 | 1.30 | 800 | 800 | 2000 | 879 | O | O | O |
| Example 30 | Butt | B2-1 | 2.0 | B1-1 | 2.0 | 2.0 | 2.0 | | FIG. 2A | 13 | 4 | 0.6 | 0.5 | 1.20 | 1000 | 1000 | 2000 | 1099 | O | O | O |
| Example 31 | Butt | B2-2 | 2.6 | B1-2 | 2.6 | 2.6 | 2.6 | | FIG. 2B | 21 | 6.7 | 0.9 | 2 | 1.50 | 800 | 800 | 2000 | 3704 | O | O | O |
| Example 32 | Butt | B1-1 | 2.0 | B1-1 | 2.0 | 2.0 | 2.0 | | FIG. 2A | 13 | 4 | 0.6 | 1 | **0.75** | 1000 | 1000 | 2000 | 1099 | O | O | × |
| Example 33 | Butt | B1-2 | 2.6 | B1-2 | 2.6 | 2.6 | 2.6 | | FIG. 2B | 21 | 6.7 | 0.9 | 2 | **2.40** | 1000 | 1000 | 2000 | 4631 | O | O | × |
| Example 34 | Lap | B1-1 | 2.0 | B1-1 | 2.0 | 2.0 | 4.0 | | FIG. 2B | 21 | 6.7 | 0.9 | 1.5 | **3.00** | 600 | 600 | 1000 | 5557 | O | O | O |
| Comparative Example 5 | Butt | B2-1 | 2.0 | B2-1 | 2.0 | 2.0 | 2.0 | | FIG. 2B | **21** | 6.7 | 0.9 | 2 | 1.20 | 500 | 500 | 1000 | **4631** | × | O | O |
| Comparative Example 6 | Butt | B2-2 | 2.6 | B2-2 | 2.6 | 2.6 | 2.6 | | FIG. 2A | 13 | 4 | 0.6 | 2 | 1.50 | 200 | 200 | 1000 | **439** | O | × | O |
| Comparative Example 7 | Butt | B1-1 | 2.0 | B2-1 | 2.0 | 2.0 | 2.0 | | FIG. 2A | 13 | 4 | 0.6 | **0** | **1.90** | 500 | 500 | 3000 | **366** | O | × | × |
| Comparative Example 8 | Butt | B1-2 | 2.6 | B2-2 | 2.6 | 2.6 | 2.6 | | FIG. 2B | 21 | 6.7 | 0.9 | **3.5** | **1.00** | 800 | 800 | 1000 | **7409** | O | × | × |

O Satisfies the relationship in the Expression
× Does not satisfy the relationship in the Expression

38

[Table 12]

Table 12

| | Joint type | Joining method | Material to be joined | | | | | | | | | | | Joined portion | | | | | Thermo-mechanically affected zone | | | |
|---|---|---|---|---|---|---|---|---|---|---|---|---|---|---|---|---|---|---|---|---|---|---|
| | | | First electrical steel strip | | | | Second electrical steel strip | | | | TbmL (mm) | TbmH (mm) | Ferrite phase area ratio (%) | Dsz (μm) | Hsz | TszL (mm) | TszH (mm) | First electrical steel strip side | | Second electrical steel strip side | |
| | | | Steel sample ID | Dbm1 (μm) | Hbm1 | Thickness (mm) | Steel sample ID | Dbm2 (μm) | Hbm2 | Thickness (mm) | | | | | | | | Ferrite phase area ratio (%) | Dhaz1 (μm) | Ferrite phase area ratio (%) | Dhaz2 (μm) |
| Example 1 | Butt | Double-sided | B1-1 | 280 | 219 | 2.0 | B1-1 | 280 | 219 | 2.0 | 2.0 | 2.0 | 100 | 76 | 234 | 1.7 | 2.0 | 100 | 190 | 100 | 193 |
| Example 2 | Butt | Double-sided | B1-1 | 280 | 219 | 2.0 | B1-1 | 280 | 219 | 2.0 | 2.0 | 2.0 | 100 | 86 | 232 | 1.8 | 2.1 | 100 | 203 | 100 | 201 |
| Example 3 | Butt | Double-sided | B1-2 | 280 | 219 | 2.6 | B1-2 | 280 | 219 | 2.6 | 2.6 | 2.6 | 100 | 100 | 230 | 2.3 | 2.8 | 100 | 217 | 100 | 214 |
| Example 4 | Butt | Double-sided | B2-1 | 310 | 242 | 2.0 | B2-1 | 310 | 242 | 2.0 | 2.0 | 2.0 | 100 | 52 | 271 | 1.7 | 2.1 | 100 | 194 | 100 | 195 |
| Example 5 | Butt | Double-sided | B2-2 | 310 | 242 | 2.6 | B2-2 | 310 | 242 | 2.6 | 2.6 | 2.6 | 100 | 103 | 257 | 2.4 | 2.7 | 100 | 221 | 100 | 225 |
| Example 6 | Butt | Double-sided | B2-2 | 310 | 242 | 2.6 | B2-2 | 310 | 242 | 2.6 | 2.6 | 2.6 | 100 | 167 | 249 | 2.6 | 2.6 | 100 | 255 | 100 | 257 |
| Example 7 | Butt | Double-sided | B1-1 | 280 | 219 | 2.0 | B2-1 | 310 | 242 | 2.0 | 2.0 | 2.0 | 100 | 75 | 248 | 1.8 | 2.0 | 100 | 185 | 100 | 199 |
| Example 8 | Butt | Double-sided | B2-1 | 310 | 242 | 2.0 | B1-1 | 280 | 219 | 2.0 | 2.0 | 2.0 | 100 | 92 | 245 | 1.8 | 2.2 | 100 | 225 | 100 | 203 |
| Example 9 | Butt | Double-sided | B1-2 | 280 | 219 | 2.6 | B2-2 | 310 | 242 | 2.6 | 2.6 | 2.6 | 100 | 110 | 242 | 2.4 | 2.8 | 100 | 215 | 100 | 235 |
| Example 10 | Butt | Double-sided | B2-1 | 310 | 242 | 2.0 | B2-1 | 310 | 242 | 2.0 | 2.0 | 2.0 | 100 | 83 | 261 | 1.8 | 2.1 | 100 | 202 | 100 | 200 |
| Example 11 | Butt | Double-sided | B2-1 | 310 | 242 | 2.0 | B2-1 | 310 | 242 | 2.0 | 2.0 | 2.0 | 100 | 94 | 258 | 1.7 | 2.1 | 100 | 223 | 100 | 224 |
| Example 12 | Butt | Double-sided | B2-2 | 310 | 242 | 2.6 | B2-2 | 310 | 242 | 2.6 | 2.6 | 2.6 | 100 | 113 | 255 | 2.4 | 2.8 | 100 | 199 | 100 | 203 |
| Example 13 | Butt | Double-sided | B1-1 | 280 | 219 | 2.0 | B1-1 | 280 | 219 | 2.0 | 2.0 | 2.0 | 100 | 48 | 242 | 1.7 | 2.2 | 100 | 203 | 100 | 201 |
| Example 14 | Butt | Double-sided | B1-2 | 280 | 219 | 2.6 | B1-2 | 280 | 219 | 2.6 | 2.6 | 2.6 | 100 | 96 | 230 | 2.3 | 2.7 | 100 | 201 | 100 | 204 |
| Example 15 | Butt | Double-sided | B1-2 | 280 | 219 | 2.6 | B1-2 | 280 | 219 | 2.6 | 2.6 | 2.6 | 100 | 151 | 225 | 2.6 | 2.7 | 100 | 233 | 100 | 231 |
| Example 16 | Butt | Double-sided | B2-1 | 310 | 242 | 2.0 | B1-1 | 280 | 219 | 2.0 | 2.0 | 2.0 | 100 | 102 | 243 | 1.7 | 2.0 | 100 | 215 | 100 | 190 |
| Example 17 | Butt | Double-sided | B1-1 | 280 | 219 | 2.0 | B2-1 | 310 | 242 | 2.0 | 2.0 | 2.0 | 100 | 159 | 237 | 1.8 | 2.1 | 100 | 230 | 100 | 256 |
| Example 18 | Butt | Double-sided | B2-2 | 310 | 242 | 2.6 | B1-2 | 280 | 219 | 2.6 | 2.6 | 2.6 | 100 | 109 | 242 | 2.4 | 2.7 | 100 | 237 | 100 | 214 |

Table 12 (cont'd)

| | Joint type | Joining method | Material to be joined | | | | | | | | | | TbmL (mm) | TbmH (mm) | Joined portion | | | | | Thermo-mechanically affected zone | | | |
|---|---|---|---|---|---|---|---|---|---|---|---|---|---|---|---|---|---|---|---|---|---|---|---|
| | | | First electrical steel strip | | | | Second electrical steel strip | | | | | | | | | Ferrite phase area ratio (%) | Dsz (μm) | Hsz | TszL (mm) | TszH (mm) | First electrical steel strip side | | Second electrical steel strip side | |
| | | | Steel sample ID | Dbm1 (μm) | Hbm1 | Thickness (mm) | Steel sample ID | Dbm2 (μm) | Hbm2 | Thickness (mm) | | | | | | | | | | | Ferrite phase area ratio (%) | Dhaz1 (μm) | Ferrite phase area ratio (%) | Dhaz2 (μm) |
| Example 19 | Butt | Double-sided | B1-1 | 280 | 219 | 2.0 | B1-1 | 280 | 219 | 2.0 | 2.0 | 2.0 | 100 | 65 | 260 | **1.5** | 1.9 | 100 | 193 | 100 | 194 |
| Example 20 | Butt | Double-sided | B1-2 | 280 | 219 | 2.6 | B1-2 | 280 | 219 | 2.6 | 2.6 | 2.6 | 100 | 98 | 231 | 2.5 | 2.7 | 100 | 215 | 100 | 212 |
| Example 21 | Lap | Double-sided | B1-1 | 280 | 219 | 2.0 | B1-1 | 280 | 219 | 2.0 | 2.0 | 2.0 | 100 | 155 | 218 | 3.2 | **3.8** | 100 | 253 | 100 | 251 |
| Comparative Example 1 | Butt | Double-sided | B1-1 | 280 | 219 | 2.0 | B1-1 | 280 | 219 | 2.0 | 2.0 | 2.0 | - | - | - | - | - | - | - | - | - |
| Comparative Example 2 | Butt | Double-sided | B1-2 | 280 | 219 | 2.6 | B1-2 | 280 | 219 | 2.6 | 2.6 | 2.6 | - | - | - | - | - | - | - | - | - |
| Comparative Example 3 | Butt | Double-sided | B1-2 | 280 | 219 | 2.6 | B2-2 | 310 | 242 | 2.6 | 2.6 | 2.6 | - | - | - | - | - | - | - | - | - |
| Comparative Example 4 | Butt | Double-sided | B1-1 | 280 | 219 | 2.0 | B2-1 | 310 | 242 | 2.0 | 2.0 | 2.0 | 100 | **210** | **205** | **1.5** | 2.6 | 100 | 203 | 100 | 227 |

Table 13

[Table 13]

| | Joint type | Joining method | Material to be joined | | | | | | | | TbmL (mm) | TbmH (mm) | Joined portion | | | | | Thermo-mechanically affected zone | | | |
|---|---|---|---|---|---|---|---|---|---|---|---|---|---|---|---|---|---|---|---|---|---|
| | | | First electrical steel strip | | | | Second electrical steel strip | | | | | | Ferrite phase area ratio (%) | Dsz (μm) | Hsz | TszL (mm) | TszH (mm) | First electrical steel strip side | | Second electrical steel strip side | |
| | | | Steel sample ID | Dbm1 (μm) | Hbm1 | Thickness (mm) | Steel sample ID | Dbm2 (μm) | Hbm2 | Thickness (mm) | | | | | | | | Ferrite phase area ratio (%) | Dhaz1 (μm) | Ferrite phase area ratio (%) | Dhaz2 (μm) |
| Example 22 | Butt | Double-sided | B1-1 | 280 | 219 | 2.0 | B1-1 | 280 | 219 | 2.0 | 2.0 | 2.0 | 100 | 77 | 234 | 1.9 | 2.0 | 100 | 190 | 100 | 205 |
| Example 23 | Butt | Double-sided | B1-2 | 280 | 219 | 2.6 | B1-2 | 280 | 219 | 2.6 | 2.6 | 2.6 | 100 | 99 | 230 | 2.5 | 2.7 | 100 | 217 | 100 | 210 |
| Example 24 | Butt | Double-sided | B2-1 | 310 | 242 | 2.0 | B2-1 | 310 | 242 | 2.0 | 2.0 | 2.0 | 100 | 50 | 272 | 1.8 | 2.0 | 100 | 192 | 100 | 197 |
| Example 25 | Butt | Double-sided | B2-2 | 310 | 242 | 2.6 | B2-2 | 310 | 242 | 2.6 | 2.6 | 2.6 | 100 | 181 | 248 | 2.3 | 2.8 | 100 | 253 | 100 | 257 |
| Example 26 | Butt | Double-sided | B1-1 | 280 | 219 | 2.0 | B2-1 | 310 | 242 | 2.0 | 2.0 | 2.0 | 100 | 79 | 248 | 1.8 | 2.2 | 100 | 203 | 100 | 223 |
| Example 27 | Butt | Double-sided | B1-2 | 280 | 219 | 2.6 | B2-2 | 310 | 242 | 2.6 | 2.6 | 2.6 | 100 | 98 | 244 | 2.5 | 2.8 | 100 | 218 | 100 | 235 |
| Example 28 | Butt | Double-sided | B1-1 | 280 | 219 | 2.0 | B1-1 | 280 | 219 | 2.0 | 2.0 | 2.0 | 100 | 103 | 229 | 2.0 | 2.0 | 100 | 198 | 100 | 196 |
| Example 29 | Butt | Double-sided | B2-2 | 310 | 242 | 2.6 | B2-2 | 310 | 242 | 2.6 | 2.6 | 2.6 | 100 | 105 | 256 | 2.3 | 2.6 | 100 | 221 | 100 | 223 |
| Example 30 | Butt | Double-sided | B2-1 | 310 | 242 | 2.0 | B1-1 | 310 | 242 | 2.0 | 2.0 | 2.0 | 100 | 80 | 247 | 1.9 | 2.0 | 100 | 225 | 100 | 205 |
| Example 31 | Butt | Double-sided | B2-2 | 310 | 242 | 2.6 | B1-2 | 310 | 242 | 2.6 | 2.6 | 2.6 | 100 | 108 | 242 | 2.4 | 2.6 | 100 | 237 | 100 | 220 |
| Example 32 | Butt | Double-sided | B1-1 | 280 | 219 | 2.0 | B1-1 | 280 | 219 | 2.0 | 2.0 | 2.0 | 100 | 80 | 231 | **1.5** | 2.0 | 100 | 193 | 100 | 195 |
| Example 33 | Butt | Double-sided | B1-2 | 280 | 219 | 2.6 | B1-2 | 280 | 219 | 2.6 | 2.6 | 2.6 | 100 | 111 | 241 | 2.5 | 2.6 | 100 | 238 | 100 | 221 |
| Example 34 | Lap | Double-sided | B1-1 | 280 | 219 | 2.0 | B1-1 | 280 | 219 | 2.0 | 2.0 | 2.0 | 100 | 183 | 212 | 3.2 | **3.5** | 100 | 251 | 100 | 255 |
| Comparative Example 5 | Butt | Double-sided | B2-1 | 310 | 242 | 2.0 | B2-1 | 310 | 242 | 2.0 | 2.0 | 2.0 | - | - | - | - | - | - | - | - | - |
| Comparative Example 6 | Butt | Double-sided | B2-2 | 310 | 242 | 2.6 | B2-2 | 310 | 242 | 2.6 | 2.6 | 2.6 | - | - | - | - | - | - | - | - | - |
| Comparative Example 7 | Butt | Double-sided | B1-1 | 280 | 219 | 2.0 | B2-1 | 310 | 242 | 2.0 | 2.0 | 2.0 | - | - | - | - | - | - | - | - | - |
| Comparative Example 8 | Butt | Double-sided | B1-2 | 280 | 219 | 2.6 | B2-2 | 310 | 242 | 2.6 | 2.6 | 2.6 | 100 | **250** | **201** | **1.9** | 2.6 | 100 | 250 | 100 | 290 |

[Table 14]

Table 14

| | Expression (3) | Expression (4) | Expression (5) | Expression (6) | Expression (7) | Expression (8) | Surface defect | Internal defect | Erichsen value of welded joint (mm) | Erichsen value ratio (%) | 90 % maintained maximum joint number |
|---|---|---|---|---|---|---|---|---|---|---|---|
| Example 1 | O | O | O | O | O | O | No | No | 13.0 | 105 | 19 |
| Example 2 | O | O | O | O | O | O | No | No | 12.7 | 102 | 21 |
| Example 3 | O | O | O | O | O | O | No | No | 12.1 | 90 | 16 |
| Example 4 | O | O | O | O | O | O | No | No | 3.7 | 106 | 17 |
| Example 5 | O | O | O | O | O | O | No | No | 3.2 | 84 | 25 |
| Example 6 | O | O | O | O | O | O | No | No | 3.1 | 82 | 18 |
| Example 7 | O | O | O | O | O | O | No | No | 3.0 | 86 | 15 |
| Example 8 | O | O | O | O | O | O | No | No | 3.3 | 94 | 25 |
| Example 9 | O | O | O | O | O | O | No | No | 3.1 | 82 | 15 |
| Example 10 | O | O | O | O | O | O | No | No | 3.1 | 89 | 18 |
| Example 11 | O | O | O | O | O | O | No | No | 3.2 | 91 | 24 |
| Example 12 | O | O | O | O | O | O | No | No | 3.1 | 82 | 23 |
| Example 13 | O | O | O | O | O | O | No | No | 13.2 | 106 | 18 |
| Example 14 | O | O | O | O | O | O | No | No | 13.3 | 99 | 23 |
| Example 15 | O | O | O | O | O | O | No | No | 11.5 | 85 | 17 |
| Example 16 | O | O | O | O | O | O | No | No | 3.2 | 91 | 22 |
| Example 17 | O | O | O | O | O | O | No | No | 2.9 | 83 | 18 |
| Example 18 | O | O | O | O | O | O | No | No | 3.1 | 82 | 20 |
| Example 19 | O | O | O | O | × | O | No | No | 10.5 | 85 | 16 |
| Example 20 | O | O | O | O | O | O | No | No | 12.1 | 90 | 18 |
| Example 21 | O | O | O | O | O | × | No | No | 9.9 | 80 | 17 |
| Comparative Example 1 | - | - | - | - | - | - | Yes | - | - | - | 0 |
| Comparative Example 2 | - | - | - | - | - | - | No | Yes | - | - | 0 |
| Comparative Example 3 | - | - | - | - | - | - | No | Yes | - | - | 0 |
| Comparative Example 4 | × | O | O | × | × | O | No | No | 1.6 | **46** | 10 |

O Satisfies the relationship in the Expression
× Does not satisfy the relationship in the Expression

[Table 15]

Table 15

| | Expression (3) | Expression (4) | Expression (5) | Expression (6) | Expression (7) | Expression (8) | Surface defect | Internal defect | Erichsen value of welded joint (mm) | Erichsen value ratio (%) | 90 % maintained maximum joint number |
|---|---|---|---|---|---|---|---|---|---|---|---|
| Example 22 | O | O | O | O | O | O | No | No | 12.6 | 102 | 14 |
| Example 23 | O | O | O | O | O | O | No | No | 13.4 | 99 | 8 |
| Example 24 | O | O | O | O | O | O | No | No | 3.3 | 94 | 9 |
| Example 25 | O | O | O | O | O | O | No | No | 3.2 | 84 | 6 |
| Example 26 | O | O | O | O | O | O | No | No | 3.1 | 89 | 13 |
| Example 27 | O | O | O | O | O | O | No | No | 3.2 | 84 | 10 |
| Example 28 | O | O | O | O | O | O | No | No | 11.1 | 90 | 14 |
| Example 29 | O | O | O | O | O | O | No | No | 3.2 | 84 | 11 |
| Example 30 | O | O | O | O | O | O | No | No | 3.4 | 97 | 14 |
| Example 31 | O | O | O | O | O | O | No | No | 3.3 | 87 | 8 |
| Example 32 | O | O | O | O | × | O | No | No | 10.8 | 87 | 17 |
| Example 33 | O | O | O | O | O | O | No | No | 11.8 | 87 | 21 |
| Example 34 | O | O | O | O | O | × | No | No | 10.1 | 81 | 18 |
| Comparative Example 5 | - | - | - | - | - | - | Yes | - | - | - | 0 |
| Comparative Example 6 | - | - | - | - | - | - | No | Yes | - | - | 0 |
| Comparative Example 7 | - | - | - | - | - | - | No | Yes | - | - | 0 |
| Comparative Example 8 | × | O | O | × | × | O | No | No | 2.5 | **66** | 7 |

O Satisfies the relationship in the Expression

× Does not satisfy the relationship in the Expression

Tables 14 and 15 indicates that for all of the Examples, electrical steel strip welded joints were obtained that were free from defects and had excellent fracture inhibition effects, while achieving highly efficient joining with a joining speed of 1000 mm/min or more. Further, Examples 1 to 18, which used rotating tools without probes, were superior in terms of durability (life span) of the rotating tools.

On the other hand, for each of the Comparative Examples, either defects occurred or a sufficient fracture inhibition effect was not achieved.

REFERENCE SIGNS LIST

1 first electrical steel strip (material to be joined)

2 second electrical steel strip (material to be joined)
3 rotating tool
3-1 rotating tool (front side rotating tool)
3-2 rotating tool (back side rotating tool)
4 joined portion
4-1 thermo-mechanically affected zone (first electrical steel strip side)
4-2 thermo-mechanically affected zone (second electrical steel strip side)
5, 5-1, 5-2 shoulder
6, 6-1, 6-2 probes
7 gripping device
8 surface plate (backing)
9, 9-1, 9-2 lead end

**Claims**

1.   An electrical steel strip friction stir welding method for joining a first electrical steel strip (1) and a second electrical steel strip (2) following the first electrical steel strip (1) by a pair of rotating tools (3) facing each other, comprising:

pressing the rotating tools (3) into an unjoined portion that is a butted portion or an overlapped portion between an end of the first electrical steel strip (1) and an end of the second electrical steel strip (2) from both sides of the unjoined portion while rotating the rotating tools (3) in opposite directions; and
joining the first electrical steel strip (1) and the second electrical steel strip (2) by moving the rotating tools (3) in a joining direction, wherein
the diameter D (mm) of shoulders (5) of the rotating tools (3) satisfies the relationship of the following Expression (1), and
a rotation speed RS (r/min) of the rotating tools (3), the diameter D (mm) of the shoulders (5) of the rotating tools (3), and a joining speed JS (mm/min), expressed as $RS \times D^3/JS$, satisfy the relationship of the following Expression (2),

$$4 \times TJ \leq D \leq 10 \times TJ \qquad ...(1)$$

$$200 \times TJ \leq RS \times D^3/JS \leq 2000 \times TJ \qquad ...(2)$$

where TJ is defined such that,
when the unjoined portion is the butted portion, TJ is an average value (mm) of the thickness of the first electrical steel strip (1) and the thickness of the second electrical steel strip (2), and
when the unjoined portion is the overlapped portion, TJ is the thickness (mm) of the overlapped portion, **characterized in that**
the joining is performed under conditions that the steel microstructures of the joined portion (4) and the thermo-mechanically affected zone (4-1, 4-2) formed by the joining of the first electrical steel strip (1) and the second electrical steel strip (2) become mainly ferrite phase and the relationships of the following Expressions (3) to (6) are satisfied,

$$Dsz \leq 200 \ \mu m \qquad ...(3)$$

$$Dhaz1 \leq Dbm1 \qquad ...(4)$$

$$Dhaz2 \leq Dbm2 \qquad ...(5)$$

$$0.9 \times (Hbm1 + Hbm2)/2 \leq Hsz \leq 1.2 \times (Hbm1 + Hbm2)/2 \qquad ...(6)$$

wherein

Dsz is an average value ($\mu$m) of ferrite grain size of the joined portion (4),

Dhaz1 is an average value ($\mu$m) of ferrite grain size of the thermo-mechanically affected zone (4-1) on a first electrical steel strip (1) side,

Dhaz2 is an average value ($\mu$m) of ferrite grain size of the thermo-mechanically affected zone (4-2) on a second electrical steel strip (2) side,

Dbm1 is an average value ($\mu$m) of ferrite grain size of the base metal portion of the first electrical steel strip (1),

Dbm2 is an average value ($\mu$m) of ferrite grain size of the base metal portion of the second electrical steel strip (2),

Hsz is an average value of hardness of the joined portion (4),

Hbm1 is an average value of hardness of the base metal portion of the first electrical steel strip (1), and

Hbm2 is the average value of hardness of the base metal portion of the second electrical steel strip (2), and the first electrical steel strip (1) and the second electrical steel strip (2) each have a chemical composition containing, in mass%,

C: 0.005 % or less,

Si: 2.0 % to 5.0 %,

Al: 3.0 % or less,

Mn: 2.00 % or less,

P: 0.2 % or less,

S: 0.01 % or less, and

N: 0.01 % or less, optionally further containing at least one selected from the group consisting of Sn: 0.2 % or less, Sb: 0.2 % or less, Ca: 0.01 % or less, REM: 0.05 % or less, Mg: 0.01 % or less, Cr: 1 % or less, Ni: 1 % or less and Cu: 1 % or less,

with the balance being Fe and inevitable impurity.

2. The electrical steel strip friction stir welding method according to claim 1, wherein the joining is performed under conditions satisfying the relationships of the following Expressions (7) and (8),

$$0.8 \times \mathrm{TbmL} \leq \mathrm{TszL} \qquad ...(7)$$

$$\mathrm{TszH} \leq 1.3 \times \mathrm{TbmH} \qquad ...(8)$$

wherein

TszL is the minimum value (mm) of the thickness of the joined portion (4),

TszH is the maximum value (mm) of the thickness of the joined portion (4),

TbmL is the thickness (mm) of the thinner of the first electrical steel strip (1) and the second electrical steel strip (2),

TbmH is the thickness (mm) of the thicker of the first electrical steel strip (1) and the second electrical steel strip (2), and

when the thicknesses of the first electrical steel strip (1) and the second electrical steel strip (2) are the same, TbmL = TbmH.

3. The electrical steel strip friction stir welding method according to claim 1 or 2, wherein the relationship of the following Expression (9) is satisfied

$$0° < \alpha \leq 2° \qquad ...(9)$$

where $\alpha$ is a tilt angle (°) of the rotating tools (3).

4. The electrical steel strip friction stir welding method according to any one of claims 1 to 3, wherein a gap G (mm) between the shoulders (5) of the rotating tools (3) satisfies the relationship of the following Expression (10),

$$0.5 \times \mathrm{TJ} - 0.1 \times \mathrm{D} \times \sin\alpha \leq \mathrm{G} \leq 0.9 \times \mathrm{TJ} - 0.1 \times \mathrm{D} \times \sin\alpha \qquad ...(10)$$

where TJ is defined such that,

when the unjoined portion is the butted portion, TJ is an average value (mm) of the thickness of the first electrical steel strip (1) and the thickness of the second electrical steel strip (2),
when the unjoined portion is the overlapped portion, TJ is the thickness (mm) of the overlapped portion, and
D is the diameter (mm) of the shoulders (5) of the rotating tools (3), and $\alpha$ is the tilt angle (°) of the rotating tools (3).

5. The electrical steel strip friction stir welding method according to any one of claims 1 to 4, wherein the rotating tools (3) are rotating tools (3) without probes (6).

6. The electrical steel strip friction stir welding method according to claim 5, wherein the leading ends of the rotating tools (3) are each a flat, convex curved, or concave curved surface.

7. The electrical steel strip friction stir welding method according to claim 5 or 6, wherein the leading ends of the rotating tools (3) each have a spiral-shaped stepped portion spiraling in the opposite direction to rotation.

8. The electrical steel strip friction stir welding method according to claim 7, wherein each of the spiral-shaped stepped portions becomes gradually lower from the center to the periphery of the leading end of the rotating tool (3).

9. The electrical steel strip friction stir welding method according to claim 7, wherein each of the spiral-shaped stepped portions becomes gradually higher from the center to the periphery of the leading end of the rotating tool (3).

10. A method of producing an electrical steel strip, the method comprising:

joining a first electrical steel strip (1) and a second electrical steel strip (2) by the electrical steel strip friction stir welding method according to any one of claims 1 to 9 to obtain a joined steel strip; and
cold rolling the joined steel strip to obtain a cold-rolled steel strip.

**Patentansprüche**

1. Verfahren zum Elektrostahlband-Reibrührschweißen zum Verbinden eines ersten Elektrostahlbands (1) und eines zweiten Elektrostahlbands (2), das auf das erste Elektrostahlband (1) folgt, mittels eines Paares einander gegenüberliegender rotierender Werkzeuge (3), die umfassen:

Eindrücken der rotierenden Werkzeuge (3) in einen nicht verbundenen Abschnitt, der ein Stoßabschnitt oder ein Überlappungsabschnitt zwischen einem Ende des ersten Elektrostahlbandes (1) und einem Ende des zweiten Elektrostahlbandes (2) ist, von beiden Seiten des nicht verbundenen Abschnitts, während die rotierenden Werkzeuge (3) in entgegengesetzte Richtungen gedreht werden, und
Verbinden des ersten Elektrostahlbandes (1) und des zweiten Elektrostahlbandes (2) durch Bewegen der rotierenden Werkzeuge (3) in einer Verbindungsrichtung, wobei
der Durchmesser D (mm) der Schultern (5) der rotierenden Werkzeuge (3) die Beziehung des folgenden Ausdrucks (1) erfüllt, und
eine Drehzahl RS (U/min) der rotierenden Werkzeuge (3), der Durchmesser D (mm) der Schultern (5) der rotierenden Werkzeuge (3) und eine Verbindungsgeschwindigkeit JS (mm/min), ausgedrückt als $RS \times D^3/JS$, die Beziehung des folgenden Ausdrucks (2) erfüllen:

$$4 \times TJ \leq D \leq 10 \times TJ \qquad \ldots (1)$$

$$200 \times TJ \leq RS \times D^3/JS \leq 2000 \times TJ \qquad \ldots (2)$$

wobei TJ so definiert ist, dass,
wenn der nicht verbundene Abschnitt der Stoßabschnitt ist, TJ ein Durchschnittswert (mm) der Dicke des ersten Elektrostahlbandes (1) und der Dicke des zweiten Elektrostahlbandes (2) ist und
wenn der nicht verbundene Abschnitt der überlappende Abschnitt ist, TJ die Dicke (mm) des überlappenden Abschnitts ist, **dadurch gekennzeichnet, dass**
das Verbinden unter Bedingungen durchgeführt wird, bei denen die Stahlmikrostrukturen des Verbindungsabschnitts (4) und der thermomechanisch beeinflussten Zone (4-1, 4-2), die durch das Verbinden des ersten Elektrostahlbandes (1) und des zweiten Elektrostahlbandes (2) gebildet wird, hauptsächlich in die Ferritphase übergehen und die Beziehungen der folgenden Ausdrücke (3) bis (6) erfüllt sind,

$$Dsz \leq 200 \ \mu m \qquad ... (3)$$

$$Dhaz1 \leq Dbm1 \qquad ... (4)$$

$$Dhaz2 \leq Dbm2 \qquad ... (5)$$

$$0{,}9 \times (Hbm1 + Hbm2)/2 \leq Hsz \leq 1{,}2 \times (Hbm1 + Hbm2)/2 \qquad ... (6)$$

wobei

Dsz ein Mittelwert ($\mu$m) der Ferritkorngröße des Verbindungsabschnitts (4) ist,

Dhaz1 ein Mittelwert ($\mu$m) der Ferritkorngröße der thermomechanisch beeinflussten Zone (4-1) auf einer Seite des ersten Elektrostahlbandes (1) ist,

Dhaz2 ein Mittelwert ($\mu$m) der Ferritkorngröße der thermomechanisch beeinflussten Zone (4-2) auf einer Seite des zweiten Elektrostahlbandes (2) ist,

Dbm1 ein Mittelwert ($\mu$m) der Ferritkorngröße des Grundmetallbereichs des ersten Elektrostahlbandes (1) ist,

Dbm2 ein Mittelwert ($\mu$m) der Ferritkorngröße des Grundmetallbereichs des zweiten Elektrostahlbandes (2) ist,

Hsz ein Mittelwert der Härte des Verbindungsbereichs (4) ist,

Hbm1 ein Mittelwert der Härte des Grundmetallbereichs des ersten Elektrostahlbandes (1) ist und

Hbm2 der Mittelwert der Härte des Grundmetallanteils des zweiten Elektrostahlbandes (2) ist und

das erste Elektrostahlband (1) und das zweite Elektrostahlband (2) jeweils eine chemische Zusammensetzung aufweisen, die in Massenprozent enthält:

C: 0,005 % oder weniger,

Si: 2,0 % bis 5,0 %,

Al: 3,0 % oder weniger,

Mn: 2,00 % oder weniger,

P: 0,2 % oder weniger,

S: 0,01 % oder weniger und

N: 0,01 % oder weniger, gegebenenfalls zusätzlich mindestens eines enthaltend, ausgewählt aus der Gruppe bestehend aus Sn: 0,2 % oder weniger, Sb: 0,2 % oder weniger, Ca: 0,01 % oder weniger, REM: 0,05 % oder weniger, Mg: 0,01 % oder weniger, Cr: 1 % oder weniger, Ni: 1 % oder weniger und Cu: 1 % oder weniger,

wobei der Rest Fe und unvermeidbare Verunreinigungen ist.

2. Verfahren zum Elektrostahlband-Reibrührschweißen gemäß Anspruch 1, wobei das Verbinden unter Bedingungen durchgeführt wird, welche die Beziehungen der folgenden Ausdrücke (7) und (8) erfüllen:

$$0{,}8 \times TbmL \leq TszL \qquad ... (7)$$

$$TszH \leq 1{,}3 \times TbmH \qquad ... (8)$$

wobei

TszL der Mindestwert (mm) der Dicke des verbundenen Abschnitts (4) ist,

TszH der Höchstwert (mm) der Dicke des verbundenen Abschnitts (4) ist,

TbmL die Dicke (mm) des dünneren des ersten Elektrostahlbands (1) und des zweiten Elektrostahlbands (2) ist,

TbmH die Dicke (mm) des dickeren des ersten Elektrostahlbands (1) und des zweiten Elektrostahlbands (2) ist und,

wenn die Dicken des ersten Elektrostahlbands (1) und des zweiten Elektrostahlbands (2) gleich sind, TbmL = TbmH.

3. Verfahren zum Elektrostahlband-Reibrührschweißen gemäß Anspruch 1 oder 2, wobei die Beziehung der folgenden Gleichung (9) erfüllt ist

$$0° < \alpha \leq 2° \qquad ... (9)$$

wobei $\alpha$ ein Neigungswinkel (°) der rotierenden Werkzeuge (3) ist.

4. Verfahren zum Elektrostahlband-Reibrührschweißen gemäß einem der Ansprüche 1 bis 3, wobei ein Spalt G (mm) zwischen den Schultern (5) der rotierenden Werkzeuge (3) die Beziehung des folgenden Ausdrucks (10) erfüllt:

$$0,5 \times TJ - 0,1 \times D \times \sin\alpha \leq G \leq 0,9 \times TJ - 0,1 \times D \times \sin\alpha \qquad ... (10)$$

wobei TJ so definiert ist, dass:

wenn der nicht verbundene Abschnitt der Stoßabschnitt ist, TJ ein Durchschnittswert (mm) der Dicke des ersten Elektrostahlbandes (1) und der Dicke des zweiten Elektrostahlbandes (2) ist,
wenn der nicht verbundene Abschnitt der überlappende Abschnitt ist, TJ die Dicke (mm) des überlappenden Abschnitts ist, und
D der Durchmesser (mm) der Schultern (5) der rotierenden Werkzeuge (3) ist und $\alpha$ der Neigungswinkel (°) der rotierenden Werkzeuge (3) ist.

5. Verfahren zum Elektrostahlband-Reibrührschweißen gemäß einem der Ansprüche 1 bis 4, wobei die rotierenden Werkzeuge (3) rotierende Werkzeuge (3) ohne Sonden (6) sind.

6. Verfahren zum Elektrostahlband-Reibrührschweißen gemäß Anspruch 5, wobei die vorderen Enden der rotierenden Werkzeuge (3) jeweils eine flache, konvex gekrümmte oder konkav gekrümmte Oberfläche sind.

7. Verfahren zum Elektrostahlband-Reibrührschweißen gemäß Anspruch 5 oder 6, wobei die vorderen Enden der rotierenden Werkzeuge (3) jeweils einen spiralförmigen, abgestuften Abschnitt aufweisen, der sich in der Gegenrichtung zur Drehung windet.

8. Verfahren zum Elektrostahlband-Reibrührschweißen gemäß Anspruch 7, wobei jeder der spiralförmigen, abgestuften Abschnitte von der Mitte zum Rand des vorderen Endes des rotierenden Werkzeugs (3) sukzessive niedriger wird.

9. Verfahren zum Elektrostahlband-Reibrührschweißen gemäß Anspruch 7, wobei jeder der spiralförmigen, abgestuften Abschnitte von der Mitte zum Rand des vorderen Endes des rotierenden Werkzeugs (3) sukzessive höher wird.

10. Verfahren zum Herstellen eines Elektrostahlbandes, wobei das Verfahren umfasst:

Verbinden eines ersten Elektrostahlbandes (1) und eines zweiten Elektrostahlbandes (2) durch das Verfahren zum Elektrostahlband-Reibrührschweißen gemäß einem der Ansprüche 1 bis 9, um ein verbundenes Stahlband zu erhalten, und
Kaltwalzen des verbundenen Stahlbandes, um ein kaltgewalztes Stahlband zu erhalten.

**Revendications**

1. Procédé de soudage par friction-malaxage de bandes d'acier électrique permettant d'assembler une première bande d'acier électrique (1) et une seconde bande d'acier électrique (2) suivant la première bande d'acier électrique (1) à l'aide d'une paire d'outils rotatifs (3) se faisant face, comprenant :

la pression des outils rotatifs (3) dans une partie non assemblée qui est une partie aboutée ou une partie de chevauchement entre une extrémité de la première bande d'acier électrique (1) et une extrémité de la seconde bande d'acier électrique (2) depuis les deux côtés de la partie non assemblée tout en faisant tourner les outils rotatifs (3) dans des directions opposées ; et
l'assemblage de la première bande d'acier électrique (1) et de la seconde bande d'acier électrique (2) par déplacement des outils rotatifs (3) dans une direction d'assemblage, dans lequel

le diamètre D (mm) d'épaulements (5) des outils rotatifs (3) satisfait à la relation de l'expression (1) suivante, et la vitesse de rotation RS (tr/min) des outils rotatifs (3), le diamètre D (mm) des épaulements (5) des outils rotatifs (3) et la vitesse d'assemblage JS (mm/min), exprimée par RS × D³/JS, satisfont à la relation de l'expression (2) suivante,

$$4 \times TJ \leq D \leq 10 \times TJ \qquad (1)$$

$$200 \times TJ \leq RS \times D^3/JS \leq 2\,000 \times TJ \qquad (2)$$

où TJ est défini de telle sorte que,

lorsque la partie non assemblée est la partie aboutée, TJ est une valeur moyenne (mm) de l'épaisseur de la première bande d'acier électrique (1) et de l'épaisseur de la seconde bande d'acier électrique (2), et

lorsque la partie non assemblée est la partie de chevauchement, TJ est l'épaisseur (mm) de la partie de chevauchement, **caractérisé en ce que**

l'assemblage est réalisé dans des conditions telles que les microstructures de l'acier de la partie assemblée (4) et de la zone affectée thermo-mécaniquement (4-1, 4-2) formée par l'assemblage de la première bande d'acier électrique (1) et de la seconde bande d'acier électrique (2) deviennent principalement de phase ferritique et que les relations des expressions (3) à (6) suivantes sont satisfaites,

$$Dsz \leq 200\ \mu m \qquad (3)$$

$$Dhaz1 \leq Dbm1 \qquad (4)$$

$$Dhaz2 \leq Dbm2 \qquad (5)$$

$$0{,}9 \times (Hbm1 + Hbm2)/2 \leq Hsz \leq 1{,}2 \times (Hbm1 + Hbm2)/2 \qquad (6)$$

où

Dsz est une valeur moyenne ($\mu$m) de la taille des grains de ferrite de la partie assemblée (4),

Dhaz1 est une valeur moyenne ($\mu$m) de la taille des grains de ferrite de la zone affectée thermo-mécaniquement (4-1) du côté d'une première bande d'acier électrique (1),

Dhaz2 est une valeur moyenne ($\mu$m) de la taille des grains de ferrite de la zone affectée thermo-mécaniquement (4-2) du côté d'une seconde bande d'acier électrique (2),

Dbm1 est une valeur moyenne ($\mu$m) de la taille des grains de ferrite de la partie de métal de base de la première bande d'acier électrique (1),

Dbm2 est une valeur moyenne ($\mu$m) de la taille des grains de ferrite de la partie de métal de base de la seconde bande d'acier électrique (2),

Hsz est une valeur moyenne de la dureté de la partie assemblée (4),

Hbm1 est une valeur moyenne de la dureté de la partie de métal de base de la première bande d'acier électrique (1), et

Hbm2 est la valeur moyenne de la dureté de la partie de métal de base de la seconde bande d'acier électrique (2), et

la première bande d'acier électrique (1) et la seconde bande d'acier électrique (2) ont chacune une composition chimique contenant, en % en masse,

C : 0,005 % ou moins,

Si : 2,0 % à 5,0 %,

Al : 3,0 % ou moins,

Mn : 2,00 % ou moins,

P : 0,2 % ou moins,

S : 0,01 % ou moins, et

N : 0,01 % ou moins, contenant éventuellement en outre au moins un élément choisi dans le groupe constitué par Sn : 0,2 % ou moins, Sb : 0,2 % ou moins, Ca : 0,01 % ou moins, terres rares : 0,05 % ou moins, Mg : 0,01 % ou moins, Cr : 1 % ou moins, Ni : 1 % ou moins et Cu : 1 % ou moins,

le reste étant du Fe et des impuretés inévitables.

**2.** Procédé de soudage par friction-malaxage de bandes d'acier électrique selon la revendication 1, dans laquelle l'assemblage est réalisé dans des conditions satisfaisant aux relations des expressions (7) et (8) suivantes,

$$0,8 \times TbmL \leq TszL \qquad (7)$$

$$TszH \leq 1,3 \times TbmH \qquad (8)$$

où

TszL est la valeur minimale (mm) de l'épaisseur de la partie assemblée (4),
TszH est la valeur maximale (mm) de l'épaisseur de la partie assemblée (4),
TbmL est l'épaisseur (mm) de la plus mince parmi la première (1) et la seconde (2) bande d'acier électrique,
TbmH est l'épaisseur (mm) de la plus épaisse parmi la première (1) et la seconde (2) bande d'acier électrique, et
lorsque les épaisseurs de la première bande d'acier électrique (1) et de la seconde bande d'acier électrique (2) sont identiques, TbmL = TbmH.

**3.** Procédé de soudage par friction-malaxage de bandes d'acier électrique selon la revendication 1 ou 2, dans lequel la relation de l'expression (9) suivante est satisfaite

$$0° < \alpha \leq 2° \qquad (9)$$

où $\alpha$ est un angle d'inclinaison (°) des outils rotatifs (3).

**4.** Procédé de soudage par friction-malaxage de bandes d'acier électrique selon l'une quelconque des revendications 1 à 3, dans lequel un écart G (mm) entre les épaulements (5) des outils rotatifs (3) satisfait à la relation de l'expression (10) suivante :

$$0,5 \times TJ - 0,1 \times D \times \sin \alpha \leq G \leq 0,9 \times TJ - 0,1 \times D \times \sin \alpha \qquad (10)$$

où TJ est défini de telle sorte que,
lorsque la partie non assemblée est la partie aboutée, TJ est une valeur moyenne (mm) de l'épaisseur de la première bande d'acier électrique (1) et de l'épaisseur de la seconde bande d'acier électrique (2),
lorsque la partie non assemblée est la partie de chevauchement, TJ est l'épaisseur (mm) de la partie de chevauchement, et
D est le diamètre (mm) des épaulements (5) des outils rotatifs (3), et $\alpha$ est l'angle d'inclinaison (°) des outils rotatifs (3).

**5.** Procédé de soudage par friction-malaxage de bandes d'acier électrique selon l'une quelconque des revendications 1 à 4, dans lequel les outils rotatifs (3) sont des outils rotatifs (3) sans électrodes (6).

**6.** Procédé de soudage par friction-malaxage de bandes d'acier électrique selon la revendication 5, dans lequel les extrémités avant des outils rotatifs (3) sont chacune une surface plane, courbée de manière convexe ou courbée de manière concave.

**7.** Procédé de soudage par friction-malaxage de bandes d'acier électrique selon la revendication 5 ou 6, dans lequel les extrémités avant des outils rotatifs (3) présentent chacune une partie en gradins en forme de spirale s'enroulant dans le sens opposé à la rotation.

**8.** Procédé de soudage par friction-malaxage de bandes d'acier électrique selon la revendication 7, dans lequel chacune des parties en gradins en forme de spirale s'abaisse progressivement depuis le centre vers la périphérie de l'extrémité avant de l'outil rotatif (3).

**9.** Procédé de soudage par friction-malaxage de bandes d'acier électrique selon la revendication 7, dans lequel chacune des parties en gradins en forme de spirale s'élève progressivement depuis le centre vers la périphérie de l'extrémité avant de l'outil rotatif (3).

10. Procédé de production d'une bande d'acier électrique, le procédé comprenant :

l'assemblage d'une première bande d'acier électrique (1) et d'une seconde bande d'acier électrique (2) par le procédé de soudage par friction-malaxage de bandes d'acier électrique selon l'une quelconque des revendications 1 à 9 afin d'obtenir une bande d'acier assemblée ; et
le laminage à froid de la bande d'acier assemblée afin d'obtenir une bande d'acier laminée à froid.

# FIG. 1A

# FIG. 1B

VIEW FROM A-A

TRAVEL DIRECTION OF
ELECTRICAL STEEL STRIP

EP 4 378 617 B1

# FIG. 1C

# FIG. 1D

EP 4 378 617 B1

VIEW FROM A-A

TRAVEL DIRECTION OF
ELECTRICAL STEEL STRIP

SHOULDER DIAMETER D:13mm

PIN DIAMETER:4mm

PIN LENGTH: 0.6mm

ROTATION DIRECTION

*FIG. 2A*

SHOULDER DIAMETER D:21mm

PIN DIAMETER:6.7mm

PIN LENGTH: 0.9mm

ROTATION DIRECTION

*FIG. 2B*

# FIG. 3

SHOULDER DIAMETER D (LEAD END DIAMETER)

# FIG. 4

SHOULDER DIAMETER D
(LEAD END DIAMETER)

CURVED SURFACE HEIGHT dv

# FIG. 5

SHOULDER DIAMETER D (LEAD END DIAMETER)

CURVED SURFACE DEPTH dc

# FIG. 6

SHOULDER DIAMETER D (LEAD END DIAMETER)

ROTATION DIRECTION

*FIG. 7*

SHOULDER DIAMETER D
(LEAD END DIAMETER)

CURVED SURFACE HEIGHT dv

ROTATION DIRECTION

*FIG. 8*

SHOULDER DIAMETER D (LEAD END DIAMETER)

CURVED SURFACE DEPTH dc

ROTATION DIRECTION

## FIG. 9

## FIG. 10

FIG. 11

FIG. 12

FIG. 13

# FIG. 14

ROTATION DIRECTION

# FIG. 15

ROTATION DIRECTION

# FIG. 16

ROTATION DIRECTION

# FIG. 17

EP 4 378 617 B1

# FIG. 18A

THICKNESS DIRECTION
(DIRECTION PERPENDICULAR TO SURFACE OF
MATERIAL TO BE JOINED)

$\alpha$

TOOL ROTATION AXIS

JOINING DIRECTION

ROTATION DIRECTION

A

JOINING CENTER LINE

3

4

5

1

9    6

2

A

8

TRAVEL DIRECTION OF
ELECTRICAL STEEL STRIP

A

# FIG. 18B

VIEW FROM A-A

TRAVEL DIRECTION OF
ELECTRICAL STEEL STRIP

EP 4 378 617 B1

SHOULDER DIAMETER D:13mm

PIN DIAMETER:4mm

PIN LENGTH: 1.8mm

ROTATION DIRECTION

*FIG. 19A*

SHOULDER DIAMETER D:21mm

PIN DIAMETER:6.7mm

PIN LENGTH: 2.4mm

ROTATION DIRECTION

*FIG. 19B*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5305466 A
- JP 2004025284 A
- JP 2011140026 A
- JP H07505090 A
- WO 9310935 A1
- JP 3261433 B
- JP 4838385 B
- JP 4838388 B
- WO 201926864 A1

- WO 201954400 A1
- JP 5185103 B
- JP 2015127063 A
- JP 2003181655 A
- JP 2003290936 A
- JP 2004195480 A
- JP 2011115846 A
- WO 2021060176 A1

**Non-patent literature cited in the description**

- **CUI, L ; FUJII, H. ; TSUJI, N. ; NOGI, K**. *Scripta Mater*, 2007, vol. 56, 637-640